# EUROPÄISCHE PATENTSCHRIFT

(11) **EP 3 509 780 B1**
(45) Veröffentlichungstag und Bekanntmachung des Hinweises auf die Patenterteilung: **04.01.2023**
(21) Anmeldenummer: 17801007.0
(22) Anmeldetag: 11.09.2017
(51) Int. Cl.: B23B 29/02, B23B 29/034

(54) **SCHNEIDENTRÄGER UND ZERSPANUNGSWERKZEUG MIT EINEM SCHNEIDENTRÄGER**
BLADE CARRIER AND MACHINING TOOL WITH A BLADE CARRIER
PORTE-LAME ET OUTIL D'USINAGE PAR ENLÈVEMENT DE COPEAUX COMPORTANT UN PORTE-LAME

(30) Priorität: 09.09.2016 DE 102016217239
(43) Veröffentlichungstag der Anmeldung: 17.07.2019
(73) Patentinhaber: Gühring KG, 72458 Albstadt (DE)
(72) Erfinder: THANNER, Jürgen, 91161 Hilpoltstein (DE); HOLLFELDER, Hans-Peter, 90768 Fürth (DE)
(74) Vertreter: Winter, Brandl - Partnerschaft mbB
(86) Internationale Anmeldenummer: PCT/DE2017/000290
(87) Internationale Veröffentlichungsnummer: WO 2018/046035

(56) Entgegenhaltungen:
- EP-A1- 1 123 766
- EP-A1- 1 213 081
- WO-A1-2004/016379
- WO-A1-2008/088629
- DE-A1-102005 028 366
- DE-A1-102011 082 964
- DE-B- 1 295 968
- DE-B3-102011 112 952
- US-A- 3 427 904

## Beschreibung

Die Erfindung betrifft einen Schneidenträger zur Anordnung an einem Grundkörper eines drehantreibbaren Zerspanungswerkzeugs gemäß dem Oberbegriff des Anspruchs 1. Ein solcher Schneidenträger ist aus der DE 10 2011 082964 A bekannt.

Ein derartiges Zerspanungswerkzeug ist beispielsweise aus der DE 100 52 376 A1 bekannt. Das in der Druckschrift gezeigte Zerspanungswerkzeug hat einen um eine Drehachse antreibbaren Grundkörper (Grundhalter) und eine den Grundkörper verlängernde werkzeugmaschinenseitige Schnittstelle mit einem HSK (Hohlschaftkegel)-Schaft. In einer Ausgestaltung des Zerspanungswerkzeugs ist ein mit einer Schneidplatte (Werkzeug) bestückter Schneidenträger (Werkzeughalter) in einer außenumfangsseitig offenen Aufnahmetasche am Grundkörper gelagert, während in einer anderen Ausgestaltung zwei jeweils mit einer Schneidplatte bestückte Schneidenträger axial versetzt jeweils in einer außenumfangsseitig offenen Aufnahmetasche am Grundkörper gelagert sind. Zum Ausgleich eines Schneidenverschleißes ist jeder Schneidenträger radial einstellbar. Eine zu diesem Zweck vorgesehene Einstelleinrichtung ist aus einer im Grundkörper längsverschiebbar angeordneten Stellstange (Einstelldorn) und einem Stellelement (Druckelement) gebildet, das sich mit einem ersten Ende an einer Steuerfläche an der Stellstange und mit seinem zweiten Ende am Schneidenträger abstützt. Bei einer mittels einer stirnseitig betätigbaren Einstellschraube veranlassten axialen Verschiebung der Stellstange wird der oder werden die Schneidenträger über ein durch die zugeordnete Steuerfläche der Stellstange und das jeweilige Stellelement gebildetes Keilflächengetriebe radial nach außen verdrängt.

Weitere, auf einem ähnlichen Funktionsprinzip beruhende Zerspanungswerkzeuge mit einem oder mehreren Schneidenträgern sind beispielsweise aus der DE 40 22 579 A1, WO 2004/012887 A2, EP 1 402 979 B1, WO 98/48964 A1, WO 2009/005804 A1, DE 24 05 694 A1 oder WO 2010/021284 A1 bekannt.

Bei den oben angegebenen Zerspanungswerkzeugen sind die Schneidenträger zur Feineinstellung der Schneiden oder zur Kompensation eines Schneidenverschleißes entweder durch eine elastische Verformung (vgl. z.B. DE 100 52 376 A1, EP 1 402 979 B1, WO 2009/005804 A1 und DE 24 05 694 A) oder durch eine Verschwenkung (vgl. DE 40 22 579 A1, WO 2004/012887 A2, WO 98/48964 A1 und WO 2010/021284 A1) relativ zum Grundkörper einstellbar. Zu diesem Zweck werden die Schneidenträger über eine im Grundkörper des Zerspanungswerkzeugs axial verschiebbar angeordnete Stellstange und ein im Grundkörper radial verschiebbar, zwischen einer Keilfläche an der Stellstange und dem Schneidenträger angeordnetes Stellelement radial gesteuert.

Diesem Problem Rechnung tragend wird in der DE 10 2004 052 211 A1 oder DE 10 2005 028 366 A1 ein mehrschneidiges Zerspanungswerkzeug (Bohrstange) vorgeschlagen, das über eine Stellstange (Zugstange) eine individuelle Nachstellung jeder der mehreren Schneiden ermöglicht. Zu diesem Zweck wird konkret vorgeschlagen, eine Einstellvorrichtung eines jeden einer Vielzahl von Schneidenträgern (Klemmhaltern) über eine Kopplungseinrichtung individuell mit der Stellstange zu verbinden. Dank der zwischen den Einstellvorrichtungen der Schneidenträger und der zentralen Stellstange angeordneten Kopplungseinrichtungen wird eine individuelle Schneidenachstellung ermöglicht, um einen Schneidenverschleiß auszugleichen.

Bei den oben diskutierten bekannten Lösungen sind jedoch weitere Einstellmöglichkeiten, die insbesondere eine von der Stellstange unabhängige, individuelle Schneidenjustierung gestatten würden, nicht vorgesehen.

Zwar kennt der Fachmann aus dem Stand der Technik verschiedene Justiereinrichtungen, die zum Ausgleich eines Schneidenverschleißes eine individuelle Verstellung eines Schneidenträgers gegenüber einem Grundkörper eines Zerspanungswerkzeugs ermöglichen. So ist beispielsweise aus der DE 196 49 143 A1 eine aus einer Differentialschraube und einer Gewindehülse gebildete Justiereinrichtung bekannt, die im Grundkörper (Schaft) eines Zerspanungswerkzeugs (Bohrstange) angeordnet ist. Zur Anordnung der Justiereinrichtung muss der Grundkörper jedoch genügend Platz bieten und wird der Grundkörper durch zusätzliche Bohrungen, Ausnehmungen, etc. zur Aufnahme der Differentialschraube und Gewindehülse geschwächt. Würde man das Zerspanungswerkzeug mit mehreren Schneidenträgern versehen, müssten daher im Grundkörper mehrere derartige Justiereinrichtungen angeordnet werden, was den Bearbeitungsaufwand nur noch erhöhen würde. Zudem wäre eine derartige Justiereinrichtung nicht mit einer Stellstange kombinierbar, wie sie aus den oben diskutierten Druckschriften bekannt ist.

Aus der US 4,428,704 ist weiterhin ein Zerspanungswerkzeug mit einem einen in einer außenumfanggseitig offenen Aufnahmetasche (recess) angeordneten Schneidenträger (cartridge) bekannt, der durch einen Schlitz in eine Brücke (bight portion) und zwei Schenkel (legs) unterteilt ist, von denen ein Schenkel mit einem Grundkörper (boring bar) fest verschraubt ist und der andere Schenkel eine Schneidplatte trägt und durch eine elastische Verformung relativ zu dem einen Schenkel radial einstellbar ist. Die zu diesem Zweck innerhalb des Schneidenträgers angeordnete Justiereinrichtung, die eine Differentialschraube aufweist, wirkt daher zwischen den gegeneinander verformbaren Schenkeln des Schneidenträgerkörpers. Die feste Verschraubung des Schneidenträgers verhindert jedoch aber eine radiale Einstellung des gesamten Schneidenträgers gegenüber dem Grundkörper, so dass auch die in der US 4,428,704 vorgeschlagen Justiereinrichtung nicht mit einer Stellstange kombinierbar wäre, wie sie aus den oben diskutierten Druckschriften bekannt ist.

Die DE 10 2011 082 964 A1 und die WO 2008/088629 A1 zeigen jeweils ein Zerspanungswerkzeug gemäß dem Oberbegriff des Anspruchs 1.

Die EP 1 123 766 A1 zeigt ein Bohrwerkzeug mit einem gegenüber einem Grundkörper des Bohrwerkzeugs radial einstellbaren Schneidenträger. Die radiale Einstellung des Schneidenträgers erfolgt über ein Stellelement in Form einer mit dem Schneidenträger verschraubten Einstellschraube, die vom Schneidenträger auskragt und über eine Nachführstange an einer im Grundkörper verschiebbaren Zugstange abgestützt ist.

Die WO 2004/016379 A1 zeigt eine Bohrstange mit einer Ausnehmung, in die eine Kassette, die einen Schneideinsatz trägt, einsteckbar ist. Die Kassette weist eine Ausnehmung auf, in der ein Stellelement in Form eines Stellkeils verschiebbar angeordnet ist. Bei Verschiebung des Stellkeils kann die Kassette und somit der Schneideinsatz gegenüber der Bohrstange radial verstellt werden.

Ausgehend von der DE 10 2011 082 964 A1 liegt der Erfindung die Aufgabe zugrunde, einen kompakt aufgebauten Schneidenträger zur radial einstellbaren Anordnung an einem Grundkörper eines Zerspanungswerkzeugs sowie ein Zerspanungswerkzeug mit wenigstens einem derartigen Schneidenträger bereitzustellen, der einerseits über eine im Grundkörper des Zerspanungswerkzeugs verschiebbar angeordnete Stellstange radial einstellbar ist und andererseits eine von einer Verschiebung der Stellstange unabhängige Feinjustierung eines am Schneidenträger gehaltenen Schneidelements im µm-Bereich ermöglicht.

Diese Aufgabe wird durch einen Schneidenträger mit den Merkmalen des Anspruchs 1 bzw. ein Zerspanungswerkzeug mit den Merkmalen des Anspruchs 13 gelöst. Vorteilhafte oder bevorzugte Weiterbildungen sind jeweils Gegenstand abhängiger Ansprüche.

Ein erfindungsgemäßer Schneidenträger ist für den Einbau in bzw. zur Anordnung an einem Grundkörper eines Zerspanungswerkzeugs, im Besonderen eines Bohrungsnachbearbeitungs- oder Bohrungsfeinbearbeitungswerkzeugs, beispielsweise eines sogenannten Lagergassenwerkzeugs, ausgelegt. Derartige Werkzeuge werden beispielsweise in der Automobilindustrie dann eingesetzt, wenn es darum geht, die Bohrungen mehrerer in Reihe angeordneter Lagerstege einer Lagergasse zum Lagern einer Welle, beispielsweise einer Kurbelwelle oder Nockenwelle, auf ein Durchmesserendmaß zu bearbeiten. Speziell in letzterem Fall ist das Zerspanungswerkzeug mehrschneidig ausgebildet, um mehrere Lagerstege einer Lagergasse synchron bearbeiten zu können, so dass am Grundkörper des Zerspanungswerkzeugs axial in Reihe mehrere Schneidenträger in den Abständen der Lagerstege entsprechenden Abständen angeordnet sein können.

Der Schneidenträger kann als eine Kassette oder als ein Klemmhalter, im Besonderen als ein Kurzklemmhalter, ausgestaltet sein und wenigstens ein Schneidelement aufnehmen und tragen. Erfindungsgemäß weist der Schneidenträger hierzu einen vorzugsweise aus einem prismatischen oder quaderförmigen Block gefertigten Trägerkörper auf, an dem wenigstens ein Sitz zur Aufnahme eines Schneidelements, im Besonderen einer Schneidplatte, vorzugsweise einer Wendeschneidplatte, vorgesehen ist. Das Schneidelement kann in dem am Trägerkörper vorgesehenen Sitz lageeinstellbar, z.B. durch Verschraubung, Klemmung, etc., oder lagefest, z.B. durch Kleben oder Löten, aufgenommen sein.

Des Weiteren kann der Schneidenträger an einer im Grundkörper des Zerspanungswerkzeugs axial verschiebbar angeordneten Hub-/Zugstange oder (allgemein:) Stellstange in der Weise im Wesentlichen radial abgestützt sein, dass er zur Nachstellung des am Trägerkörper gehaltenen Schneidelements relativ zum Grundkörper radial ein- und aussteuerbar, d.h. radial nach innen und außen verstellbar, ist. Hierzu kann der Trägerkörper in der Art eines Biegebalkens am Grundkörper elastisch verformbar oder aber in der Art einer Wippe am Grundkörper schwenkbar angeordnet sein. Insbesondere kann vorgesehen sein, dass der Schneidenträger mit dem am Trägerkörper gehaltenen Schneidelement durch die Stellstange in radialer Richtung zwischen einer eingesteuerten Position, in der das am Schneidenträger gehaltene Schneidelement auf einem minimalen Durchmesser bezüglich einer Dreh-oder Längsmittelachse des Grundkörpers liegt, in radialer Richtung beispielsweise in einem definierten (geringen) Abstand außerhalb, auf Höhe oder innerhalb des Außenumfangs des Grundkörpers, und einer ausgesteuerten Position, in der das am Schneidenträger gehaltene Schneidelement auf einem maximalen Radius, d.h. auf einem vorgegeben Nenndurchmessermaß bezüglich der Dreh- oder Längsmittelachse des Grundkörpers liegt, d.h. in einem (großen) radialen Abstand über dem Außenumfang des Grundkörpers, radial verstellbar sein.

Ungeachtet dessen soll erfindungsgemäß zum Ausgleich eines Schneidenverschleißes eine individuelle Schneidenfeinjustierung im µm-Bereich möglich sein. Hierzu wird vorgeschlagen, in den Trägerkörper des Schneidenträgers eine Justiereinrichtung zu integrieren, die erfindungsgemäß mit einem im Trägerkörper verschiebbar geführten Stellelement zusammenwirkt, das zur Abstützung am Grundkörper des Zerspanungswerkzeugs vom Trägerkörper auskragt. Das Stellelement kann im Besonderen über eine Ausnehmung oder Öffnung im Trägerkörper auf einer vom Schneidelement abgewandten Seite des Trägerkörpers auskragen. Das Stellelement kann in Form eines Stößels, Stifts, Bolzens oder, wie später noch erläutert wird, in Form einer Nase ausgebildet sein, die von einer im Trägerkörper verschiebbar geführten Gewindehülse seitlich auskragt. Entscheidend ist lediglich, dass sich der Schneidenträger mit dem am Trägerkörper gehaltenen Schneidelement über das Stellelement am unmittelbar oder mittelbar am Grundkörper, beispielsweise an einer im Grundkörper axial verschiebbar angeordneten Stellstange, eines Zerspanungswerkzeugs in der Weise abstützen kann, dass eine Verschiebung des Stellelements eine radiale Schneidenjustierung relativ zum Grundkörper erlaubt.

Durch die im Trägerkörper aufgenommene Justiereinrichtung kann somit eine Verschiebung des Stellelements im und relativ zum Trägerkörper des Schneidenträgers erreicht werden. Über das sich entweder unmittelbar oder mittelbar am Grundkörper des Zerspanungswerkzeugs abstützende Stellelement kann der Trägerkörper mit dem Schneidelement relativ zum Grundkörper des Zerspanungswerkzeugs zur Schneidenjustierung beispielsweise aufgrund eines Verschleißes oder bei einer Neumontage radial verstellt werden.

Durch das sich unmittelbar oder mittelbar am Grundkörper abstützende Stellelement wird also eine Schneidenfeinjustierung durch eine radiale Verstellung des gesamten Schneidenträgers relativ zum Grundkörper ermöglicht. Davon unabhängig kann der Schneidenträger selbstverständlich über weitere Möglichkeiten für eine zusätzliche Lageeinstellung des Schneidelements am Trägerkörper verfügen.

Durch einen erfindungsgemäßen Schneidenträger kann also beispielsweise ein mit einer Stellstange im Grundkörper versehenes Zerspanungswerkzeug so weitergebildet werden, dass sich für die Schneideneinstellung wenigstens zwei voneinander unabhängige Möglichkeiten ergeben. Einerseits kann über die in den Schneidenträger integrierte Justiereinrichtung die radiale Lage des sich über das Stellelement an der Stellstange abstützenden Schneidenträgers fein justiert werden. In diesem Fall kann beispielsweise vorgesehen sein, dass die Feinjustierung des Schneidenträgers dann durchgeführt wird, wenn der Schneidenträger über das Stellelement an einer einen maximalen Durchmesser der Stellstange definierenden Stelle, vorzugsweise an einem Zylinderabschnitt, abgestützt ist, so dass ein von dem so justierten Schneidenträger getragenes Schneidelement auf einem gewünschten Nenndurchmesser liegt. Wenn die Stellstange im Anschluss an den oben erwähnten Zylinderabschnitt eine Durchmesserverjüngung aufweist, vorzugsweise in Form eines an den Zylinderabschnitt anschließenden Kegelabschnitts, kann durch eine axiale Verschiebung der Stellstange erreicht werden, dass der bereits justierte Schneidenträger durch das sich an der Durchmesserverjüngung der Stellstange abstützende Stellelement radial eingesteuert, d.h. radial nach innen verstellt wird, beispielsweise um das Zerspanungswerkzeug in eine zu bearbeitende Bohrung einzufahren, ohne dass das vom Schneidenträger getragene Schneideelement mit der zu bearbeitenden Bohrungswand in Kontakt kommt. Anschließend kann der Schneidenträger wieder radial ausgesteuert, d.h. radial nach außen verstellt, werden, indem die Stellstange in eine Richtung verschoben wird, in der das Stellelement auf den oben erwähnten Zylinderabschnitt aufläuft, wodurch das am Schneidenträger getragene Schneidelement wieder auf den zuvor justierten Nenndurchmesser gebracht und eine Bohrung bearbeitet werden kann.

Die Justiereinrichtung kann verschieden ausgeführt sein, solange sie zum Zweck der gewünschten Schneidenfeinjustierung eine dementsprechend feine Verschiebung des Stellelements im bzw. relativ zum Trägerkörper des Schneidenträgers ermöglicht.

Durch die Integration der Justiereinrichtung in den Trägerkörper wird ein kompakt aufgebauter Schneidenträger erhalten, der sich mit der integrierten Justiereinrichtung und bei entsprechender verliersicherer Festlegung des Stellelements im Trägerkörper als eine austauschbare Komponente handhaben und am Grundkörper eines Zerspanungswerkzeugs anordnen lässt und zwar unabhängig davon, ob im Grundkörper eine Stellstange vorgesehen ist oder nicht. Denn der Schneidenträger kann über das auskragende Stellelement entweder am Grundkörper oder an einer im Grundkörper verschiebbar angeordneten Stellstange abgestützt sein.

Erfindungsgemäß ist die Verschieberichtung des Stellelements quer zur Auskragrichtung des Stellelements orientiert, wodurch eine Abstützung des Stellelements an einer im Grundkörper verschiebbar angeordneten Stellstange besonders einfach gelingt. In diesem Fall kann der Schneidenträger am Grundkörper eines Zerspanungswerkzeugs so angeordnet werden, dass das Stellelement im Wesentlichen radial an einer Stellstange abgestützt und die Justiereinrichtung vom Außenumfang des Grundkörpers her, beispielsweise quer zur Dreh- oder Längsmittelachse des Zerspanungswerkzeugs, betätigbar ist und das Stellelement im Wesentlichen quer zur Dreh- oder Längsmittelachse verschiebt. Durch die umfangsseitige Betätigung lässt sich die axiale Baulänge des Schneidenträgers klein halten, was die Anordnung am Grundkörper eines mehrschneidigen Lagergassenwerkzeugs erleichtert. Für die im µm-Bereich angestrebte Feinjustierung eines am Schneidenträger gehaltenen Schneidelements gegenüber dem Grundkörper des Zerspanungswerkzeugs, die beispielsweise im Bereich von 0,2 mm liegt, ist nur ein sehr kurzer Verschiebeweg des Stellelements erforderlich, der sich in einer Richtung quer zur Dreh-oder Längsmittelachse des Zerspanungswerkzeugs ohne weiteres sicherstellen lässt.

Erfindungsgemäß ist das Stellelement in seiner Auskragrichtung relativ zum Trägerkörper unverschiebbar, d.h. lagefest, angeordnet, das Stellelement ist also nur geradlinig in Verschieberichtung verschiebbar. Durch die Einschränkung der Bewegungsmöglichkeiten auf eine geradlinige Bewegung wird die Ausbildung einer das Stellelement führenden Führungsausnehmung im Trägerkörper vereinfacht. Gerade im Hinblick auf die oben erwähnte Abstützung an einer im Grundkörper verschiebbar angeordneten Stellstange weist das Stellelement auf seiner vom Trägerkörper abgewandten Stirnseite vorzugsweise eine in einem schiefen Winkel zur Verschieberichtung des Stellelements liegende Keilfläche auf. Die stirnseitige Druckfläche des Stellelements kann mit einer grundkörperseitig vorgesehenen Steuerfläche, beispielsweise an der Stellstange oder für den Fall, dass keine Stellstange vorgesehen ist, im Grundkörper ein Keilflächengetriebe bilden, über das bei einer Betätigung der Justiereinrichtung die gewünschte Feinjustierung des Schneidenträgers und damit des am Schneidenträger gehaltenen Schneidelements relativ zum Grundkörper ermöglicht wird.

Um durch Verunreinigungen oder Ungenauigkeiten bedingte Justierfehler so gering als möglich zu halten, wird vorteilhaft eine Punktanlage des Stellelements am Grundkörper, also beispielsweise der Stellstange, angestrebt. Eine Punktanlage lässt sich besonderes einfach durch runde Flächen erreichen. Hierzu können die Keilfläche am Stellelement und/oder die gegenüberliegende grundkörperseitige Steuerfläche beispielsweise abgerundet sein.

Eine besonders feine Justierung im µm-Bereich gelingt beispielsweise dadurch, dass die Justiereinrichtung eine Differentialgewindespindel und eine Gewindehülse aufweist, die Gewindehülse im Trägerkörper vorzugsweise in Verschieberichtung des Stellelements verschiebbar angeordnet ist und das Stellelement in Verschieberichtung mitnimmt, und die Differentialgewindespindel mit einem ersten Gewindeabschnitt in der Gewindehülse und mit einem zweiten Gewindeabschnitt im Trägerkörper verschraubt ist. Der erste Gewindeabschnitt und zweite Gewindeabschnitt können verschiedene Gewindesteigungen (Ganghöhen), aber gleiche Gewinderichtungen (Gangrichtungen) aufweisen. Bei einer Betätigung der Differentialgewindespindel bewegt sich die Gewindehülse in Richtung der Spindelachse daher um eine Strecke, die dem Steigungsunterschied der beiden Gewindeabschnitte der Differentialgewindespindel entspricht. Die Gewindesteigungen können so festgelegt sein, dass sich die Differentialgewindespindel für die gewünschte Schneidenfeinjustierung im Bereich von 0,2 µm um 4 mm in Richtung der Spindelachse schraubt.

Wenn die Achse der Differentialgewindespindel dabei parallel zur Verschieberichtung des Stellelements ausgerichtet ist, wird die Drehbewegug der Differentialgewindespindel in eine geradlinige Verschiebung des Stellelements in Richtung der Spindelachse gewährleistet. Weil die Bewegungsrichtung der Gewindehülse indiesem Fall mit der Verschieberichtung des Stellelements übereinstimmt, können die Gewindehülse und das Stellelement beispielsweise aus einem Stück gefertigt sein. In diesem Fall kann die Gewindehülse des Weiteren im Trägerkörper vorzugsweise durch einen Formschluss mit den die Führungsausnehmung begrenzenden Seitenwänden drehfest geführt sein. Der Trägerkörper des Schneidenträgers kann hierzu beispielsweise eine sich in Richtung der Spindelachse erstreckende, im Querschnitt im Wesentlichen quadratische oder rechteckige Führungsausnehmung aufweisen, die die Gewindehülse mit einer definierten Spielpassung formschlüssig aufnimmt und führt. Die Öffnung im Trägerkörper, aus der das Stellelement auskragt, mündet dabei in die Führungsausnehmung für die Gewindehülse.

Die oben erwähnte Drehbetätigung der Differentialgewindespindel wird beispielsweise durch ein am Trägerkörper axialfest, aber drehbeweglich angeordnetes Betätigungselement erreicht, das mit der Differentialgewindespindel drehfest, aber axial beweglich verbunden ist. Die Drehbetätigung des Betätigungselements kann über einen sogenannten Skalenschlüssel bewerkstelligt werden. Hierzu kann das Betätigungselement ein an den Skalenschlüssel angepasstes Mehrkant- oder Mehrzahn-Mitnahmeprofil aufweisen.

Die im Trägerkörper vorgesehene Gewindebohrung, in die sich die Differentialgewindespindel bei einer Drehbetätigung schraubt, ist aus herstellungstechnischen Gründen vorzugsweise nicht unmittelbar im Trägerkörper, sondern in einer im Trägerkörper festgelegten Gewindebuchse ausgebildet.

Wie oben schon angedeutet kann der Schneidenträger neben der im Trägerkörper integrierten Justiereinrichtung, die eine Feinjustierung des Schneidenträgers insgesamt gegenüber dem Grundkörper eines Zerspanungswerkzeugs ermöglicht, über eine weitere, von dieser Justiereinrichtung unabhängige Einstelleinrichtung verfügen, die im Trägerkörper integriert ist, aber lediglich zur Einstellung eines im Sitz angeordneten Schneidelements relativ zum Trägerkörper dient. Diese Einstelleinrichtung kann einen Exzenterbolzen-, Gewindekeil- oder Kegelschrauben-Verstellmechanismus aufweisen, der unmittelbar mit dem im Sitz aufgenommenen Schneidelement zusammenwirkt.

Durch die Anordnung eines erfindungsgemäßen Schneidenträgers am Grundkörper eines Zerspanungswerkzeugs, in dem eine Stellstange vorgesehen ist, kann das Zerspanungswerkzeug so weitergebildet werden, dass sich wenigstens zwei voneinander unabhängige Möglichkeiten für eine radiale Schneidenverstellung ergeben. Ein erfindungsgemäßer Schneidenträger eignet sich daher im Besonderen zur Anordnung an beispielsweise einem Grundkörper (Bohrstange) eines Lagergassenwerkzeugs. Das Lagergassenwerkzeug kann vorteilhaft mehrschneidig ausgebildet sein und daher mehrere Schneidenträger aufweisen, die in vorgegebenen axialen Abständen entlang des Grundkörpers, vorzugsweise in einer Reihe angeordnet sind und jeweils über ein zugeordnetes Stellelement an einer zugeordneten Steuerfläche, die sich im Besonderen aus einem Kegelflächen- und einem Zylinderflächenabschnitt zusammensetzen kann, einer im Grundkörper verschiebbar angeordneten Stellstange abgestützt sind. Jeder Schneidenträger ist dabei vorzugsweise in einer zugeordneten außenumfangsseitig offenen Aufnahmetasche im Grundkörper aufgenommen und trägt wenigstens ein Schneidelement.

Gerade bei einer Lagergasse müssen sämtliche Lagerstege im Durchmesser sehr präzise und mit einer hohen Fluchtgenauigkeit gefertigt werden. Jeder erfindungsgemäß gestaltete Schneidenträger gewährleistet die hierzu erforderliche individuelle Feinjustierung der Schneiden im µm-Bereich. Davon unabhängig können die Schneidenträger über die Stellstange in radialer Richtung verstellt werden. Die sich durch eine axiale Verschiebung der Stellstange zusätzlich ergebende Steuermöglichkeit kann dann dazu genutzt werden, die an der Stellstange abstützenden Schneidenträger synchron relativ zum Grundkörper des Zerspanungswerkzeugs radial ein- oder auszusteuern, d.h. die Schneidenträger jeweils in radialer Richtung zwischen einer eingesteuerten Position, in der die Schneidelemente jeweils auf einem minimalen Durchmesser, beispielsweise in einem definierten (geringen) Abstand außerhalb, auf Höhe oder radial innerhalb des Außenumfangs des Grundkörpers, liegen, und einer ausgesteuerten Position, in der die Schneidelemente auf dem vorgegeben Nenndurchmessermaß liegen, zu verstellen. In dem eingesteuerten Zustand kann das Zerspanungswerkzeug dann geradlinig, beispielsweise zentrisch, in eine zu bearbeitende Lagergasse eingefahren werden, ohne dass die Schneidelemente mit der zu bearbeitenden Lagerbohrung in Berührung kommen. Durch eine anschließende durch eine axiale Verschiebung der Stellstange durchgeführte synchrone radiale Aussteuerung der Schneidenträger können dann die Lagerstege der Lagergasse auf den gewünschten Nenndurchmesser bearbeitet werden.

Eine einfache Verstellung der Schneidenträger gelingt dadurch, dass jeder Schneidenträger in der jeweiligen Aufnahmetasche des Grundkörpers um eine quer zur Drehachse des Werkzeugs ausgerichtete Schwenkachse schwenkbar angeordnet ist. Das oben erwähnte radiale Ein- und Aussteuern jedes Schneidenträgers erfolgt dann durch eine Schwenkbewegung des Schneidenträgers am Grundkörper, die besonders einfach dann gelingt, wenn die Schwenkachse des Schneidenträgers im Wesentlichen parallel zur Verschieberichtung des Stellelements des Schneidenträgers und insbesondere quer zur Dreh- oder Längsmittelachse des Zerspanungswerkzeugs ausgerichtet ist.

Dabei kann der Trägerkörper einen um die Schwenkachse schwenkbar gelagerten zweiseitigen Hebel bilden, wobei die im Schneidenträger integrierte Justiereinrichtung und eine Spannschraube, die zur Befestigung des Schneidenträgers am Grundkörper dient, auf verschiedenen Seiten der Schwenkachse angeordnet sein können. Der Trägerkörper weist in diesem Fall einen ersten Hebelarm, an dem das Schneidelement und das Stellelement angeordnet sind, und einen zweiten Hebelarm auf, an dem die Spannschraube angreift. Der Spannschraube ist vorteilhaft eine am Grundkörper des Zerspanungswerkzeugs abzustützende Druckfeder zugeordnet, die den zweiten Hebelarm mit einer Federkraft beaufschlägt und dadurch den Trägerkörper um die Schwenkachse so verdreht, dass das Stellelement in Richtung Grundkörper gedrückt wird.

In einer bevorzugten Weiterbildung ist der Schneidenträger in der Aufnahmetasche des Grundkörpers abgedichtet aufgenommen. Hierzu kann zwischen dem Schneidenträger und dem Grundkörper, beispielsweise einer am Grundkörper festgelegten Einfassung, eine Dichtung angeordnet sein, die ein für die radiale Einstellbarkeit des Schneidenträgers relativ zum Grundkörper erforderliches seitliches Spiel abdichtet. Durch die Abdichtung wird der Eintritt von Schmutzpartikeln etc. verhindert, was eine µ-genaue Einstellung gewährleistet.

Im Folgenden wird mit Hilfe der beigefügten Zeichnungen eine bevorzugte Ausführungsform eines Zerspanungswerkzeugs mit einem erfindungsgemäßen Schneidenträger beschrieben. Es zeigt:
FIG. 1 eine Seitenansicht des Zerspanungswerkzeugs;
FIG. 2 eine Seitenansicht des Zerspanungswerkzeugs in FIG. 1 in einem in einer Lagergasse eingefahren Zustand;
FIG. 3 eine Seitenansicht des Zerspanungswerkzeugs in einem gegenüber der Seitenansicht der FIG. 2 um 90° nach oben gedrehten Zustand;
FIG. 4 einen Längsschnitt des Zerspanungswerkzeugs in FIG. 2;
FIG. 5 einen Querschnitt des Zerspanungswerkzeugs gemäß V-V in FIG. 3;
FIG. 17 eine Vorderansicht des Zerspanungswerkzeugs;

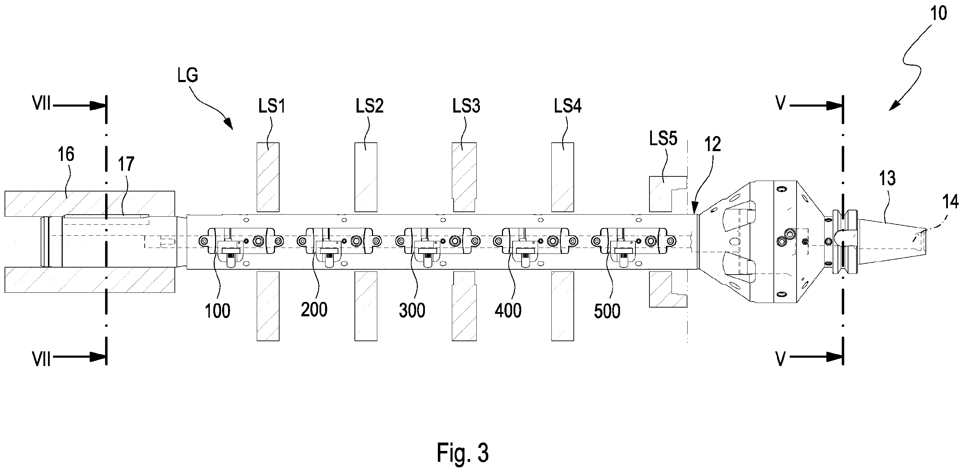

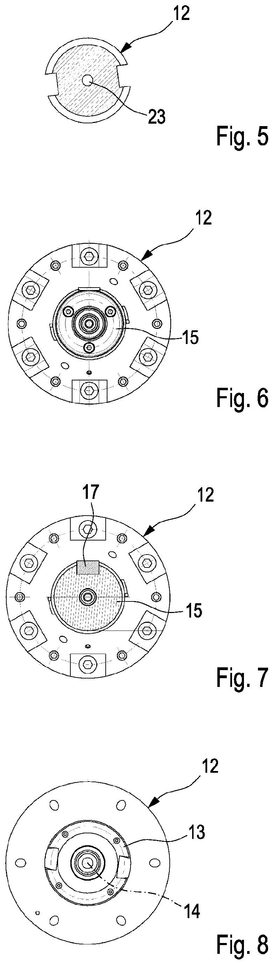

FIG. 7 einen Querschnitt des Zerspanungswerkzeugs gemäß VII-VII in FIG. 3;
FIG. 8 eine Rückansicht des Zerspanungswerkzeugs;

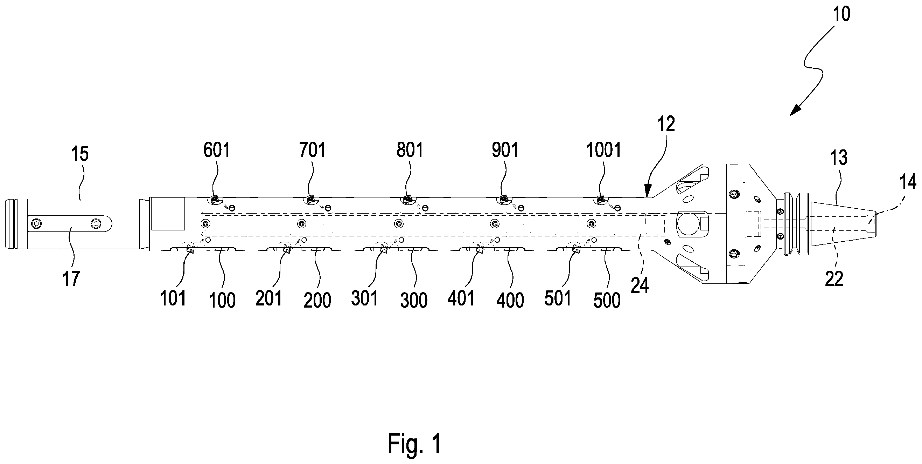

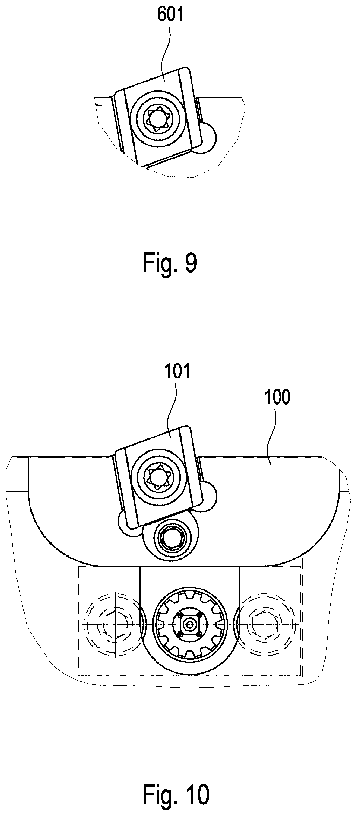

FIG. 9 eine in FIG. 1 mit Y Vorbearbeitungsschneidplatte;

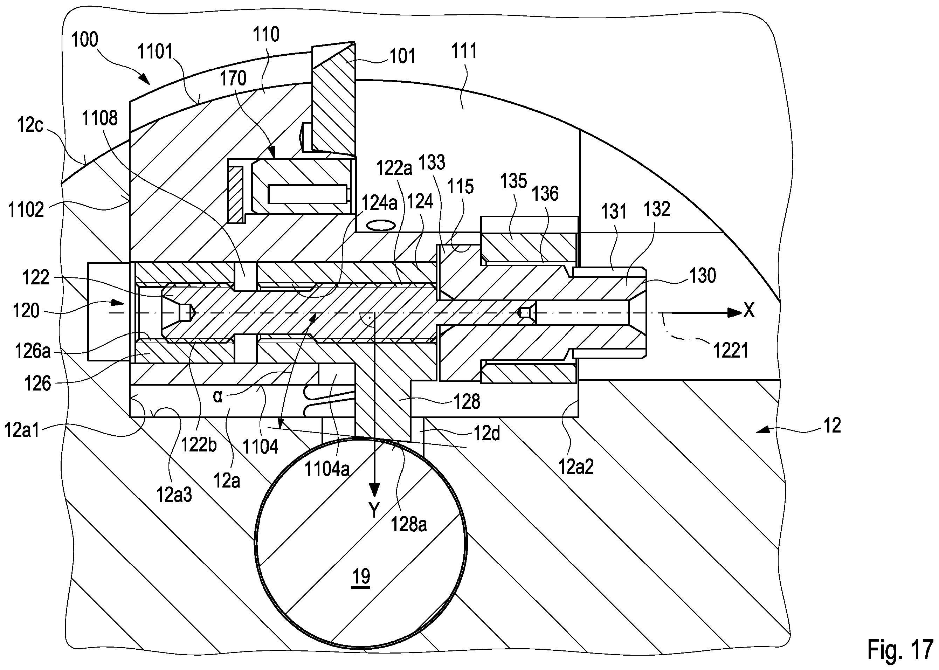

FIG. 10 eine in FIG. 17 in Richtung X zu sehende Endbearbeitungsschneidplatte;

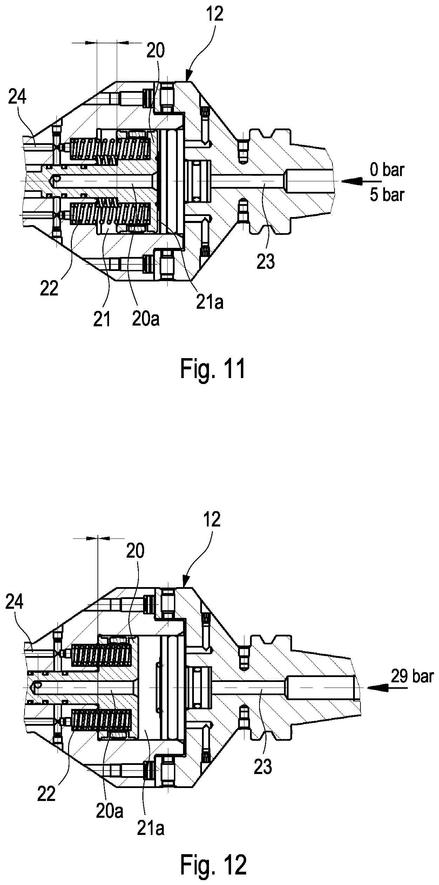

FIG. 11 einen Längsschnitt durch einen einen Kolben aufnehmenden Teil des Grundkörpers in einem Zustand ohne Kolbenhub;
FIG. 12 einen Längsschnitt durch den den Kolben aufnehmenden Teil des Grundkörpers in einem Zustand mit Kolbenhub;

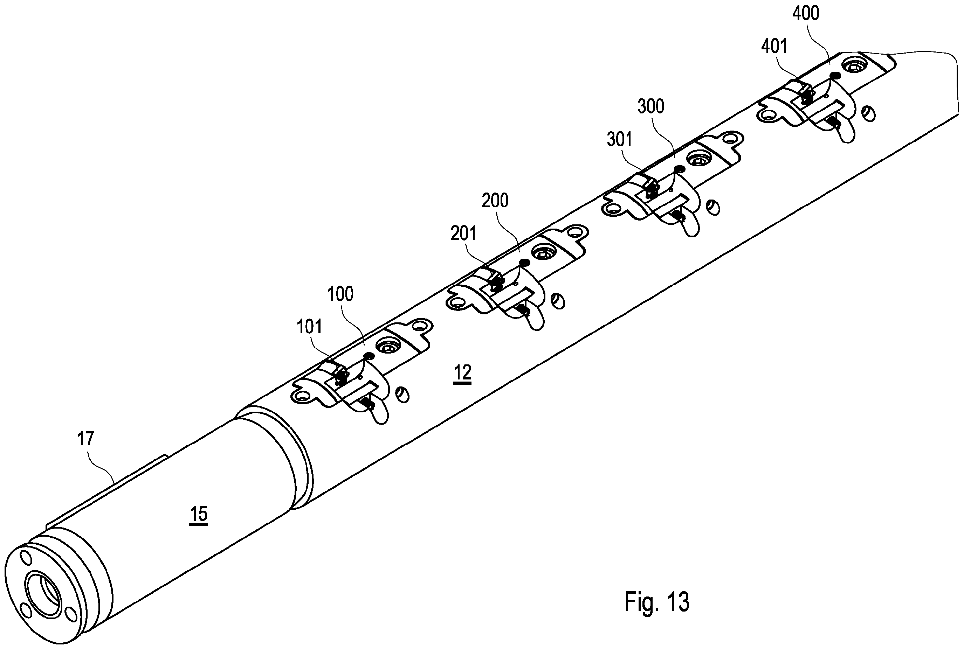

FIG. 13 eine perspektivische Draufsicht eines vorderen Längenabschnitts des Zerspanungswerkzeugs in einem größeren Maßstab;

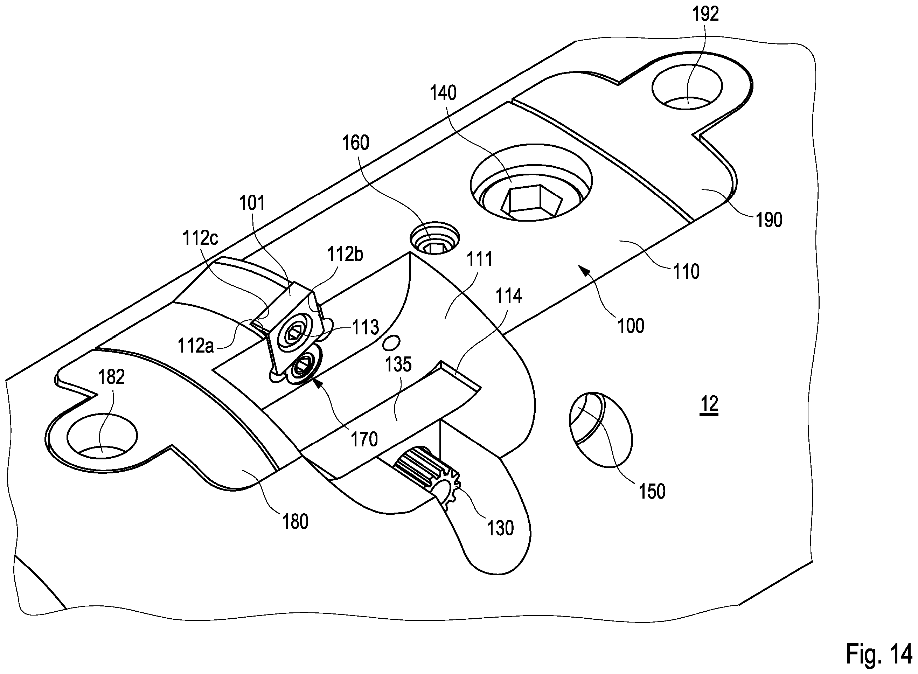

FIG. 14 eine perspektivische Draufsicht eines Teils des vorderen Längenabschnitts mit einem erfindungsgemäßen Schneidenträger in einem größeren Maßstab;

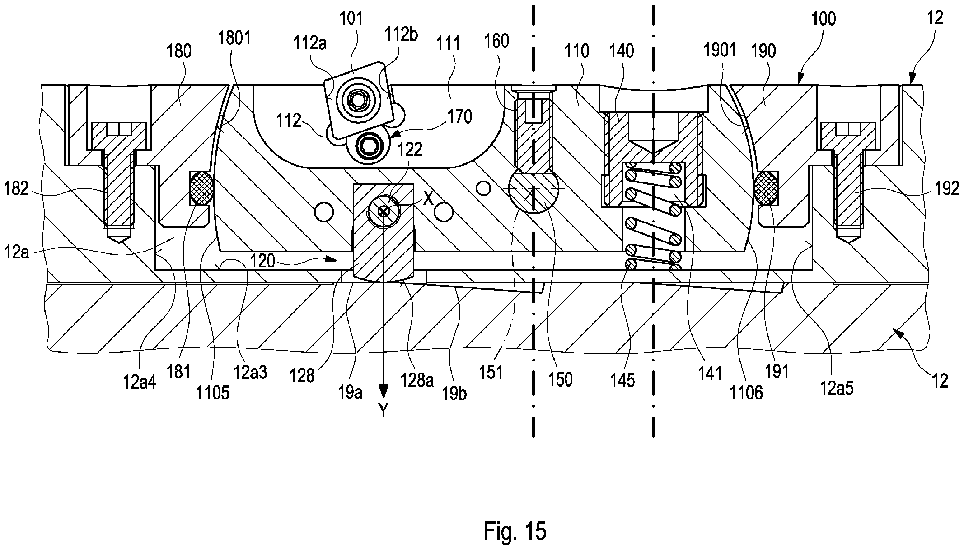

FIG. 15 einen Längsschnitt des Teils in FIG. 14;

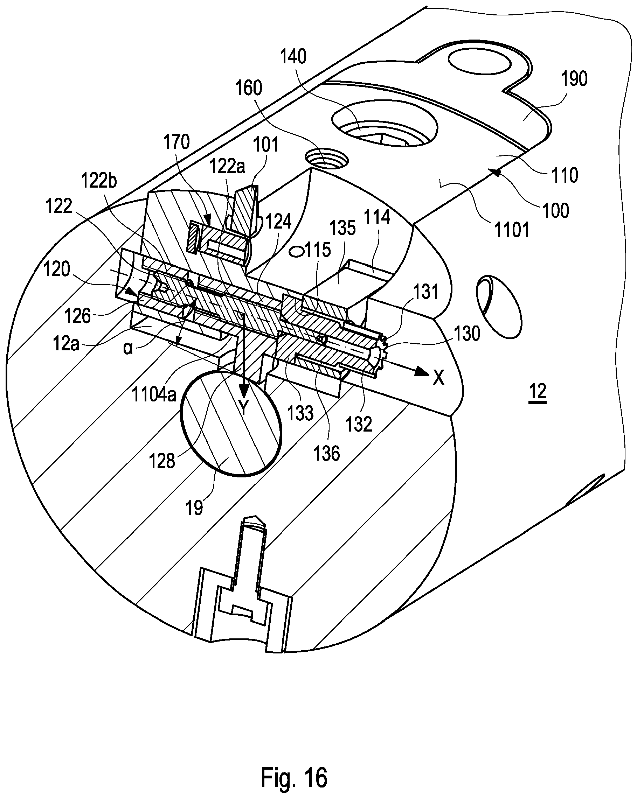

FIG. 16 einen perspektivischen Querschnitt des Teils in FIG. 14;
FIG. 17 den Querschnitt des Längenabschnittteils mit dem erfindungsgemäßen Schneidenträger;

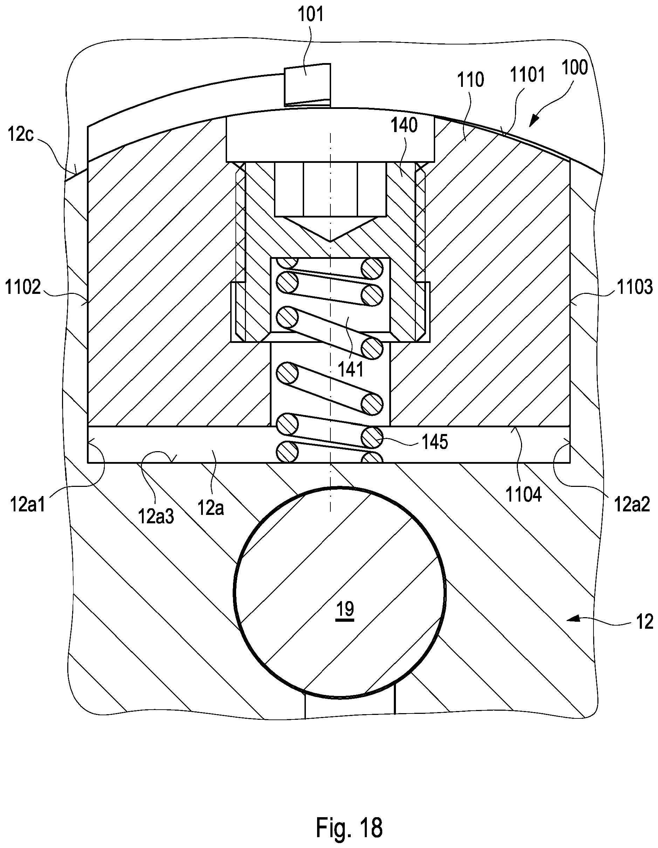

FIG. 18 einen Querschnitt gemäß "XVIII-XVIII" in FIG. 15 in einem größeren Maßstab;

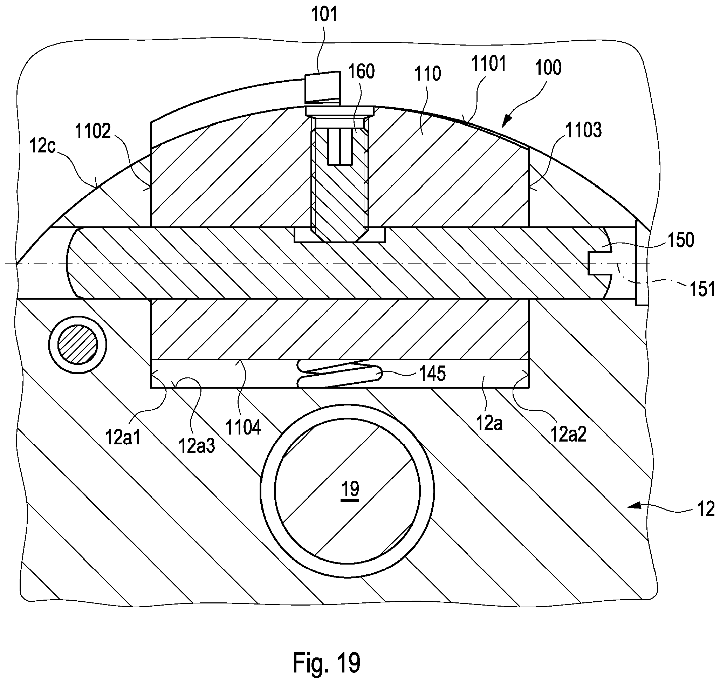

FIG. 19 einen Querschnitt gemäß "XIX-XIX" in FIG. 15 in einem größeren Maßstab;

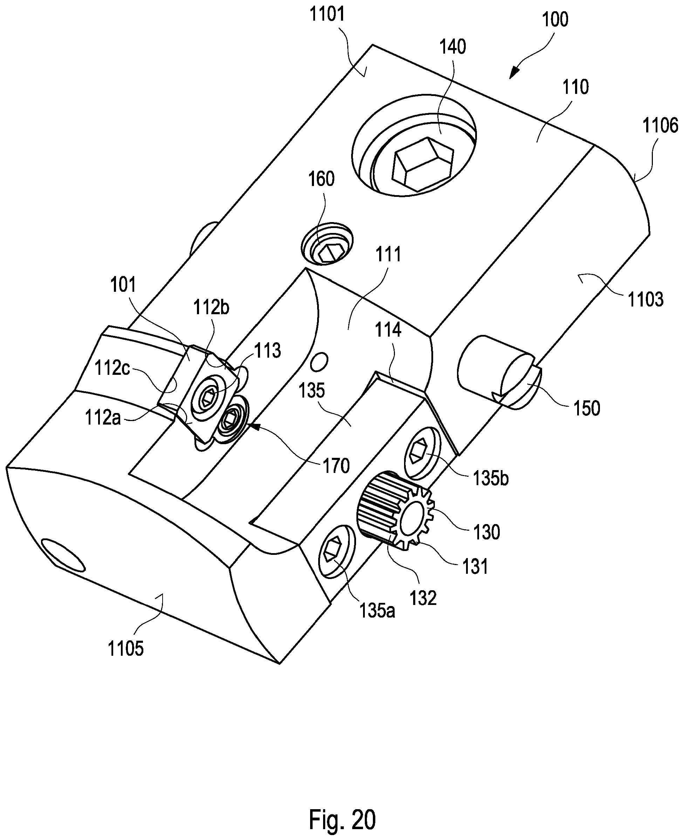

FIG. 20 eine perspektivische Draufsicht des erfindungsgemäßen Schneidenträgers; und

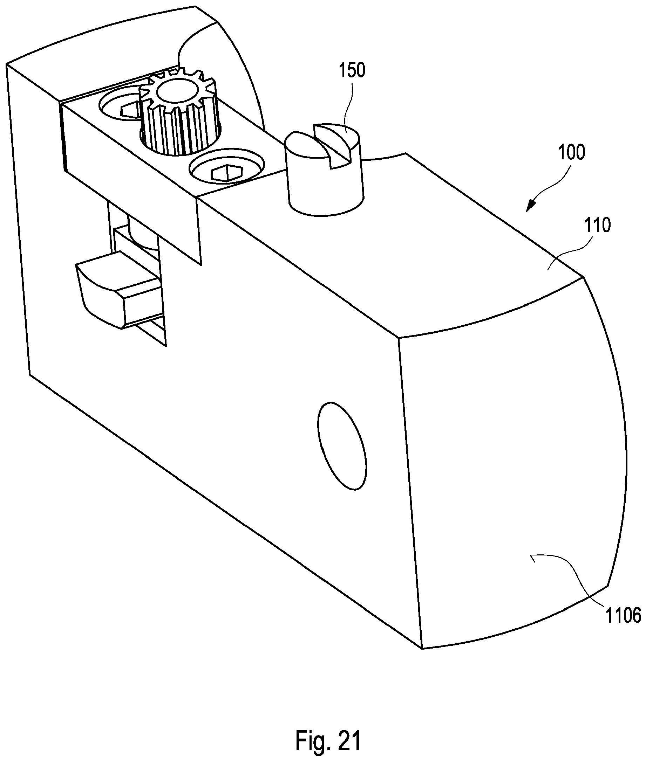

FIG. 21 eine perspektivische Rückansicht des erfindungsgemäßen Schneidenträgers.

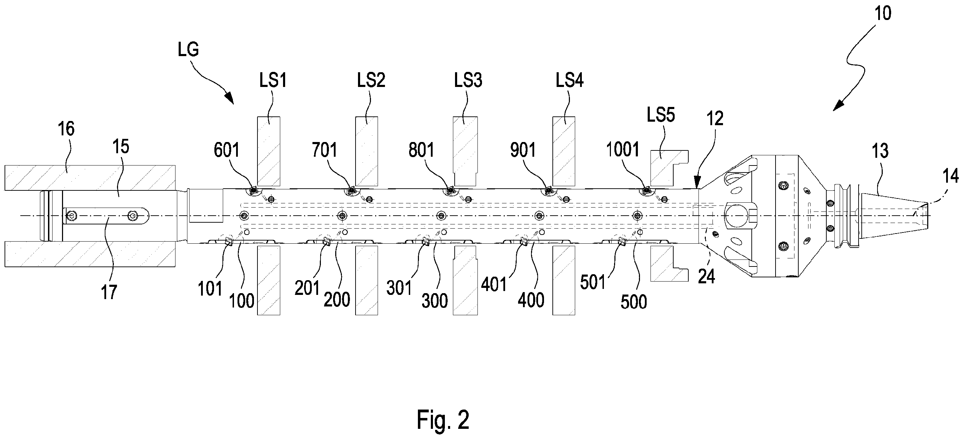

Die FIG. 1 zeigt in einer Seitenansicht ein mehrschneidiges Zerspanungswerkzeugs 10, das für eine Lagergassenbearbeitung eingesetzt wird. Die FIG. 2 bis 4 zeigen eine Seitenansicht bzw. einen Längsschnitt des Zerspanungswerkzeugs 10 in eine Lagergasse LG eingefahrenen Zustand. Die in FIG. 2 bis 4 skizzierte Lagergasse LG weist in der gezeigten Ausführungsform fünf Lagerstege LS1 bis LS5 auf, wobei die Zahl der Lagerstege für die Erfindung nicht entscheidend ist. Die Lagergasse LG befindet sich in einem (nicht näher gezeigten) Werkstück, beispielsweise einem Zylinderkurbelgehäuse eines Verbrennungsmotors. Das Werkzeug 10 kann daher auch als ein Lagergassenwerkzeug oder allgemein als Bohrungsnachbearbeitungsoder Bohrungsfeinbearbeitungswerkzeug bezeichnet werden.

Das mehrschneidige Zerspanungswerkzeug 10 weist einen um eine Dreh-oder Längsmittelachse 14 drehantreibbaren Grundkörper 12, der in der gezeigten Ausführungsform als eine Bohrstange ausgebildet ist, und eine am hinteren (in FIG. 1 rechten) Ende an den Grundkörper 12 axial anschließende werkzeugmaschinenspindelseitige Schnittstelle 13 auf, die in der gezeigten Ausführungsform einen sogenannten SK (Steilkegel)-Schaft hat. Alternativ dazu kann aber auch beispielsweise ein sogenannter HSK (Hohlschaftkegel)-Schaft oder dergleichen vorgesehen sein. An dem von der Schnittstelle 13 fernen, vorderen (in FIG. 1 linken) Ende weist der Grundkörper 12 einen zylindrischen Lagerabschnitt 15 auf, über den das Zerspanungswerkzeug 10 während der spanabhebenden Bearbeitung der in FIG. 2 bis 4 skizzierten Lagergasse LG eine Abstützung in radialer Richtung erfährt. Die FIG. 2 bis 4 zeigen, dass der Lagerabschnitt 15 in der gezeigten Ausführungsform über einen Mitnehmer 17, in der gezeigten Ausführungsform eine Passfeder, drehfest in einer Lagerbuchse 16 aufgenommen ist, die wiederum in einem (nicht gezeigten) Gegenlager in dem in FIG. 2 bis 4 skizzierten Werkstück drehbeweglich gelagert ist.

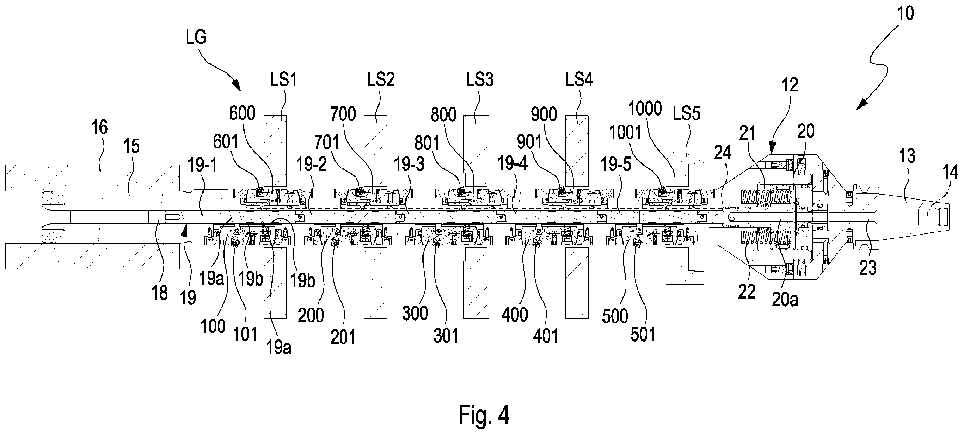

Man erkennt in FIG. 4 des Weiteren eine in einer mittig angeordneten axialen Durchgangsbohrung 18 im Grundkörper 12 längsverschiebbar angeordnete Stellstange 19. Die Stellstange 19 ist in der gezeigten Ausführungsform aus mehreren, im Besonderen einer der Zahl der Lagerstege LS1 bis LS5 entsprechenden Zahl von in axialer Richtung zug-/druckfest miteinander verbundenen Teilstücken 19-1 bis 19-5 zusammengesetzt und an ihrem in FIG. 4 rechten Ende zug-/druckfest mit einem Kolben 20 verbunden. Der Kolben 20 ist in einer zylindrischen Öffnung 21 im Grundkörper 12 abgedichtet aufgenommen und bei Druckbeaufschlagung gegen die Federkraft einer zwischen dem Kolben 20 und dem Boden der Öffnung 21 angeordneten Druckfeder 22 in FIG. 4 nach links axial verschiebbar. Man erkennt in FIG. 4, 11 und 12, dass ein im Grundkörper 12 ausgebildetes Kanalsystem 23, das in einen Druckraum 21a der zylindrischen Öffnung 21 führt und von dort aus - in der in FIG. 4 oder 11 gezeigten Ausgangsstellung des Kolbens 20 - über einen Kanal 20a im Kolben 20 mit in FIG. 1 und 2 gestrichelt angedeuteten Kanälen 24 verbunden ist, die bei der spanabhebenden Bearbeitung der Lagergasse LG die Schneiden des Zerspanungswerkzeugs 10 mit Kühlschmiermittel versorgen. In diesem Zustand ist ein freier Kühlschmiermittelfluss zu den Schneiden des Zerspanungswerkzeugs 12 möglich, sofern der Kühlschmiermitteleinspeisedruck eine vorgegebene Höhe nicht überschreitet. Wird der Kühlschmiermittel-Einspeisedruck über die vorgegebene Höhe hinaus erhöht, wird der Kolben 20 in die FIG. 12 gezeigte Hubstellung nach links verdrängt, wodurch die Verbindung des Kanals 20a im Kolben 20 mit den zu den Schneiden des Zerspanungswerkzeugs 10 führenden Kanälen 24 unterbrochen wird. Mit dem Kolben 20 wird des Weiteren die Stellstange 19 in Fig. 1 bis 4 nach links verschoben. Wird der Kühlschmiermittel-Einspeisedruck anschließend wieder bis unter die vorgegebene Höhe abgesenkt, werden der Kolben 20 und die Stellstange 19 durch die Federkraft der zwischen dem Kolben 20 und dem Grundkörper 12 angeordneten Druckfeder 22 wieder in FIG. 1 bis 4 nach rechts zurück gedrängt bzw. verschoben. In der gezeigten Ausführungsform findet der freie Kühlschmiermittelfluss zu den Schneiden des Zerspanungswerkzeugs 12 beispielsweise bei 5 bar statt, während die axiale Verschiebung der Stellstange 19 beispielsweise bei 20 bar eingeleitet wird. Die oben erwähnte vorgegebene Höhe des Kühlschmiermittel-Einspeisedrucks kann also beispielsweise in einem Bereich von 15 bis 20 bar liegen.

Man erkennt in FIG. 13 des Weiteren, dass jedes der Teilstücke 19-1 bis 19-5 der Stellstange 19 axial abwechselnd Zylinderabschnitte 19a und Kegelabschnitte 19b aufweist. Die axial aufeinanderfolgenden Zylinder- und Kegelabschnitte 19a, 19b jedes Teilstücks 19-1 bis 19-5 bilden dem jeweiligen Teilstück 19-1 bis 19-5 zugeordnete, jeweils aus einem Zylinderflächenabschnitt und einem Kegelflächenabschnitt zusammengesetzte Steuerflächen der Stellstange 19, an denen nachfolgend beschriebene Schneidenträger 100 bis 500 und 600 bis 1000 radial abgestützt sind.

Man erkennt in FIG. 1 bis 4, dass am Grundkörper 12 des mehrschneidigen Zerspanungswerkzeugs 10 in einer im Wesentlichen diametral gegenüberliegenden Anordnung zwei Schneidensätze mit einer der Zahl der zu bearbeitenden Lagerstege LS1 bis LS5 entsprechenden Zahl von Schneiden angeordnet sind, die jeweils von einem an einem Schneidenträger 100 bis 500 bzw. 600 bis 1000 gehaltenen Schneidelement 101 bis 501 bzw. 601 bis 1001 gebildet sind. In der gezeigten Ausführungsform sind die Schneidelemente 101 bis 501 und 601 bis 1001 von Schneidplatten, im Besonderen Wendeschneidplatten, gebildet. Jeder der beiden Schneidensätze weist in der gezeigten Ausführungsform daher fünf Schneidplatten 101 bis 501 bzw. 601 bis 1001 auf. Jede der Schneidplatten 101 bis 501 und 601 bis 1001 weist wenigstens eine geometrisch bestimmte Schneide zur spanabhebenden Bearbeitung einer zugeordneten Lagestelle LS1 bis LS5 auf. Die einem Schneidensatz zugeordneten Schneidplatten sind in vorgegebenen axialen Abständen entlang des Grundkörpers 12, d.h. parallel zur Dreh- oder Längsmittelachse 14, in einer Reihe angeordnet. Die axialen Abstände, in denen die Schneidplatten 101 bis 501 bzw. 601 bis 1001 angeordnet sind, entsprechen den Abständen, in denen die Lagerstege LS1 bis LS5 angeordnet sind. Die FIG. 1, 2 und 4 zeigen, dass die Schneidplatten 101 bis 501 gegenüber den Schneidplatten 601 bis 1001 um ein definiertes axiales Maß nach vorne (in FIG. 1, 2, 4 nach links) versetzt sind.

Jede der Schneidplatten 101 bis 501 und 601 bis 1001 ist im Besonderen über einen der oben erwähnten Schneidenträger 100 bis 500 bzw. 600 bis 1000, der in der gezeigten Ausführungsform als ein Kurzklemmhalter ausgebildet ist, am Grundkörper 12 des Zerspanungswerkzeugs 10 angeordnet. Jeder der Schneidenträger 100 bis 500 und 600 bis 1000 sitzt hierzu in einer sich in Längsrichtung des Grundkörpers 12 erstreckenden, außenumfangssseitig offenen Aufnahmetasche am Grundkörper 12 in einer Weise, dass er über die oben erwähnte Stellstange 19 radial ein- und aussteuerbar, d.h. radial nach innen oder außen verstellbar, ist.

In der gezeigten Ausführungsform dienen die auch als Semi-Finish-Schneidplatten bezeichneten Schneidplatten 601 bis 1001 zur Vorbearbeitung der Lagerstege LS1 bis LS5, während die auch als Finish-Schneidplatten bezeichneten Schneidplatten 101 bis 501 zur Endbearbeitung der Lagerstege LS1 bis LS5 auf einen vorgegebenen Nenndurchmesser dienen. In dem in FIG. 1 bis 4 gezeigten Zustand, in dem sämtliche Schneidenträger 100 bis 500 und 600 bis 1000 an einem zugeordneten Zylinderabschnitt 19a der Stellstange 19 abgestützt und damit radial ausgesteuert sind, können durch einen axialen Rückhub (in FIG. 1 bis 4 nach rechts) des drehangetriebenen Zerspanungswerkzeugs 10 alle Lagerstege LS1 bis LS5 synchron bearbeitet werden und zwar in der Weise, dass die Lagerstege LS1 bis LS5 zunächst mittels der Semi-Finish-Schneidplatten 601 bis 1001 vor- und anschließend mittels der Finish-Schneidplatten 101 bis 501 auf den vorgegebenen Nenndurchmesser fertigbearbeitet werden.

Für die Lagergassenbearbeitung ist es entscheidend, dass die Lagerstege LS1 bis LS5 im Durchmesser sehr präzise und mit einer hohen Fluchtgenauigkeit bearbeitet werden. Um dieser Forderung gerecht zu werden, müssen insbesondere die für die Endbearbeitung auf Nenndurchmesser verantwortlichen Finish-Schneidplatten 101 bis 501 relativ zur Dreh-oder Längsmittelachse 14 bzw. zum Grundkörper 12 des Zerspanungswerkzeugs 10 µm-genau auf ein jeweils vorgegebenes Nenndurchmessermaß justiert werden können. Das ist beispielsweise dann erforderlich, wenn das Zerspanungswerkzeugs 10 hergestellt wird, oder wenn ein Schneidenverschleiß eine Nachjustierung erforderlich macht.

Zu diesem Zweck sind bei dem erfindungsgemäßen Zerspanungswerkzeug 10 die für die Endbearbeitung der Lagerstege LS1 bis LS5 eingesetzten Schneidplatten 101 bis 501 an lagejustierbaren Schneidenträgern 100 bis 500 aufgenommen. Hierzu verfügt jeder Schneidenträger 100 bis 500 über eine Justiereinrichtung 120, über die er gegenüber dem Grundkörper 12, im Besonderen gegenüber der im Grundkörper 12 axial verschiebbar angeordneten Stellstange 19, µm-genau individuell justierbar ist, sowie eine von der Justiereinrichtung unabhängige Einstelleinrichtung 170, über die die an dem jeweiligen Schneidenträger 100 bis 500 gehaltene Schneidplatte 101 bis 501 gegenüber dem jeweiligen Schneidenträger 100 bis 500 radial einstellbar ist. Man erkennt in den FIG. 1 bis 4, dass die Schneidenträger 100 bis 500 alle den gleichen Aufbau aufweisen, so dass im Folgenden mit Hilfe der FIG. 13 bis 21 die Anordnung am Grundkörper 12, der Aufbau und die Funktionsweise sowie die erwähnte Justiereinrichtung und Einstelleinrichtung am Beispiel des vordersten Schneidenträgers 100 näher beschrieben werden.

Die FIG. 13 zeigt eine perspektivische Draufsicht eines vorderen Längenabschnitts des Zerspanungswerkzeugs 10 in einem größeren Maßstab; die FIG. 14 zeigt eine perspektivische Draufsicht eines Teils des vorderen Längenabschnitts mit dem Schneidenträger 100 in einem größeren Maßstab; FIG. 15 zeigt einen Längsschnitt des Teils in FIG. 14; FIG. 16 zeigt einen perspektivischen Querschnitt des Teils in FIG. 14; FIG. 17 zeigt den Querschnitt des Längenabschnittteils mit dem Schneidenträger 100; FIG. 18 zeigt einen Querschnitt gemäß "XVIII-XVIII" in FIG. 15 in einem größeren Maßstab; FIG. 19 zeigt einen Querschnitt gemäß "XIX-XIX" in FIG. 15 in einem größeren Maßstab; FIG. 20 zeigt eine perspektivische Draufsicht des Schneidenträgers 100; und FIG. 21 zeigt eine perspektivische Rückansicht des Schneidenträgers 100.

Der Schneidenträger 100, der in der Ausführungsform als ein Kurzklemmhalter ausgebildet ist, weist im Wesentlichen einen Trägerkörper 110, die am Trägerkörper 110 gehaltene Schneidplatte 101, die oben erwähnte Einstelleinrichtung 170 zur Lageeinstellung der Schneidplatte 101 relativ zum Trägerkörper 110, die oben erwähnte Justiereinrichtung 120 zur Lagejustierung des Schneidenträgers 100 relativ zum Grundkörper 12 bzw. zur Stellstange 19, eine Spannschraube 140, eine Druckfeder 145, einen Schwenkbolzen 150 und eine Sicherungsschraube 160 auf.

Man erkennt in FIG. 14 bis 21, dass der Trägerkörper 110 aus einem prismatischen oder quaderförmigen Block gefertigt ist, der in einer sich in Richtung der Dreh-oder Längsmittelachse 14 des Grundkörpers 12 erstreckenden prismatischen oder quaderförmigen Aufnahmetasche 12a im Grundkörper 12 aufgenommen ist. Die Aufnahmetasche 12a ist von zwei zur Dreh- oder Längsmittelachse 14 parallelen ebenen Seitenflächen 12a1, 12a2, einer achsparallelen ebenen Bodenfläche 12a3 sowie einer vorderen und hinteren ebenen Stirnfläche 12a4 bzw. 12a5 begrenzt. Man erkennt in FIG. 19, dass die Aufnahmetasche 12a in einem radialen Abstand zu der zur Dreh- oder Längsmittelachse 14 koaxialen Stellstange 19 ausgebildet ist. Bezogen auf eine die Dreh- oder Längsmittelachse 14 enthaltende Längsmittelebene, in der auch die Achsen der Spannschraube 140 und der Sicherungsschraube 160 liegen, ist die Aufnahmetasche 12a im Querschnitt im Wesentlichen symmetrisch geformt.

Die Außenumfangsfläche 1101 des Trägerkörpers 110 ist analog der Zylindermantelfläche 12c des Grundkörpers 12 zylindrisch ausgebildet. Die beiden ebenen Seitenflächen 1102, 1103 des Trägerkörpers verlaufen parallel zur Dreh- oder Längsmittelachse 14 und liegen mit einer definierten Spielpassung an den gegenüberliegenden Seitenflächen 12a1 bzw. 12a2 der Aufnahmetasche 12a an. Die ebene Unterfläche 1104 ist einem ausreichenden Abstand zur Bodenfläche 12a3 der Aufnahmetasche 12a gehalten, um die Schwenkbeweglichkeit des Schneidenträgers 100 um eine durch den Schwenkbolzen 150 definierte Schwenkachse 151 sicherzustellen. Die am Schneidenträger 100 gehaltene Schneidplatte 101 kann über eine außenumfangsseitig offene Einbuchtung 111 in einem Sitz 112 im Trägerkörper 100 montiert und eingestellt werden. Der Sitz 112 ist in axialer Richtung von zwei Seitenflächen 112a, 112b begrenzt, zwischen denen die Schneidplatte 101 axial formschlüssig aufgenommen ist. Die Schneidplatte 101 ist in einer dem Fachmann bekannten, üblichen Art und Weise mittels einer Klemmschraube 113, die die Schneidplatte 101 gegen eine Sitzfläche 112c drückt, am Trägerkörper 110 gehalten. Zur radialen Ausrichtung der Schneidplatte 101 relativ zum Trägerkörper 110 weist der Schneidenträger 100 eine integrierte Einstelleinrichtung 170 auf, die in der gezeigten Ausführungsform aus einem nicht näher beschriebenen Exzenterbolzen-, Gewindekeil- oder Kegelschrauben-Verstellmechanismus gebildet ist, der mit der im Sitz 112 aufgenommenen Schneidplatte 101 zusammenwirkt, wie der Fachmann aus den FIG. 14, 15 und 20 erkennt.

In der gezeigten Ausführungsform ist der Schneidenträger 100 in der Aufnahmetasche 12a des Grundkörpers 12 abgedichtet aufgenommen. Hierzu ist der Trägerkörper 110 mit seinen Stirnseiten 1105, 1106 axial zwischen zwei am Grundkörper 12 durch Verschraubung 182, 192 festgelegte Einfassungen 180, 190 angeordnet, die jeweils eine an der Stirnseite 1105 bzw. 1106 anstehende Dichtung 181 bzw. 191 halten. Man erkennt in FIG. 15, dass die Stirnseiten 1105, 1106 in Übereinstimmung mit den gegenüberliegenden Seitenflächen 1801 bzw. 1901 der Einfassungen 180, 190 rund geformt sind, um das für die Schwenkbarkeit des Schneidenträgers 100 erforderliche Spiel gering halten und durch die Dichtungen 181, 191 abdichten zu können.

Wie bereits angegeben, ist der Schneidenträger 100 in der Aufnahmetasche 12a über den am Grundkörper 12 gelagerten Schwenkbolzen 150 um die Schwenkachse 151 schwenkbeweglich aufgenommen. Der den Trägerkörper 110 durchdringende Schwenkbolzen 150 erstreckt sich in eine Richtung quer zur Dreh- oder Längsmittelachse 14 (vgl. FIG. 19) und ist beidseits des Trägerkörpers 110 in nicht näher bezeichneten Achsbohrungen im Grundkörper 12 angeordnet. Der die Schwenkachse 151 definierende Schwenkbolzen 150 ist durch eine außenumfangsseitig zugängliche, im Trägerkörper 110 verschraubte Sicherungsschraube 160 am Trägerkörper 110 verliersicher befestigt. Der Schneidenträger 100 ist damit in der Aufnahmetasche 12a um die quer zur Dreh- oder Längsmittelachse 14 ausgerichtete Schwenkachse 151 wippenartig schwenkbar.

Man erkennt in FIG. 15, dass die Schwenkachse 151 in der hinteren Hälfte des Trägerkörpers 110 liegt. Der Trägerkörper 110 bildet damit einen zweiseitigen Hebel, wobei die Justiereinrichtung 120 auf der in FIG. 15 linken, längeren Hebelseite und die Spannschraube 140 auf der rechten, kürzeren Hebelseite angeordnet ist.

Die FIG. 18 zeigt einen Querschnitt durch die Spannschraube 140. Zu erkennen ist, dass die Spannschraube 140 ebenso wie die bereits erwähnte Sicherungsschraube 160 (vgl. Fig. 19) im Wesentlichen radial in den im Trägerkörper 110 eingeschraubt und außenumfangsseitig betätigbar sind. Zu erkennen des Weiteren, dass sich die Spannschraube 140 über die Druckfeder 145 an der Bodenfläche 12a3 der Aufnahmetasche 12a des Grundkörpers 12 abstützt. Spannschraubenseitig ist die Druckfeder 120 am Grund einer Bohrung 141 abgestützt. Die Druckfeder 145 übt über die Spannschraube 140 auf den Schneidenträger 100 eine Federkraft dergestalt aus, dass der Schneidenträger 100 in FIG. 15 im Gegenuhrzeigersinn um die Schwenkachse 151 verschwenkt wird.

Die auf der anderen Hebelseite des Trägerkörpers 110 angeordnete Justiereinrichtung 120 ist in FIG. 15 bis 17 gut zu erkennen. Man erkennt, dass die Justiereinrichtung 120 vollständig in den Halterkörper 110 integriert ist. Die Justiereinrichtung 120 weist eine Differentialgewindespindel 122, eine Gewindehülse 124, eine Gewindebuchse 126, ein Stellelement 128 und ein Betätigungselement 130 auf. Die Gewindehülse 124 ist im Trägerkörper 110 in einer sich quer zur Dreh- oder Längsmittelachse 14 erstreckenden Führungsausnehmung 1108 verschiebbar aufgenommen. Hierzu ist die Gewindehülse 124 durch einen Formschluss in der Querschnittskontur in der Führungsausnehmung 1108 bezüglich der Spindelachse 1221 drehfest angeordnet. In der gezeigten Ausführungsform wird der Formschluss durch eine im Querschnitt im Wesentlichen rechteckig geformte Führungsausnehmung 1108 und eine dementsprechend im Querschnitt im Wesentlichen rechteckig geformte Gewindehülse 124 erreicht (vgl. FIG. 21).

Die Gewindebuchse 126 ist an dem in Fig. 17 linken Ende der Führungsausnehmung 1108 des Trägerkörpers 110 durch eine Presspassung, Löten, Kleben oder dergleichen dreh- und axialfest verankert.

Die Differentialgewindespindel 122 weist einen ersten Gewindeabschnitt 122a und einen zweiten Gewindeabschnitt 122b auf. Der erste Gewindeabschnitt 122a ist mit einer Gewindebohrung 124a der Gewindehülse 124 verschraubt, während der zweite Gewindeabschnitt 122b mit einer Gewindebohrung 126a der Gewindebuchse 126 verschraubt ist. Der erste Gewindeabschnitt 122a und zweite Gewindeabschnitt 122b haben ungleiche Gewindesteigungen (Ganghöhen), aber gleiche Gewinderichtungen (Gangrichtungen). Bei einer Drehbetätigung der Differentialgewindespindel 122 bewegt sich die Gewindehülse daher 124 in Richtung der Spindelachse 1221 daher um eine Strecke, die dem Steigungsunterschied der beiden Gewindeabschnitte 122a, 122b der Differentialgewindespindel 122 entspricht. Die Gewindesteigungen der Gewindeabschnitte 122a, 122b sind in dem gezeigten Ausführungsbeispiel so festgelegt, dass sich die Differentialgewindespindel 122 für die gewünschte Schneidenfeinjustierung im Bereich von 0,2 µm um 4 mm in Richtung der Spindelachse 1221 schraubt.

Zur Drehbetätigung ist die Differentialgewindespindel 122 einem Betätigungselement 130 drehfest, aber axial beweglich verbunden. Das Betätigungselement 130 ist in dem gezeigten Ausführungsbeispiel im Besonderen über einen im Wesentlichen quaderförmigen Halter 135, der mittels zweier Schrauben 135a, 135b in einer seitlichen Ausnehmung 112 am Trägerkörper 110 angeschraubt ist, am Trägerkörper 110 axialfest, aber drehbeweglich gehalten. Der Halter 135 weist eine mittige Durchgangsöffnung 136 auf, aus der ein Betätigungskopf 132 das Betätigungselement 130 seitlich herausragt. Ein Fußteil 133 des Betätigungselements 130 ist zwischen dem Halter 135 und einer die Ausnehmung 114 in Richtung der Spindelachse 1221 verlängernden Vertiefung 115 mit einem für die Drehbetätigung erforderlichen geringen Spiel angeordnet. Eine Drehbetätigung des Betätigungselements 130 kann über einen sogenannten (nicht gezeigten) Skalenschlüssel bewerkstelligt werden, wofür das Betätigungselement 130 ein an den Skalenschlüssel angepasstes Mehrkant- oder Mehrzahn-Mitnahmeprofil 131 aufweist.

Die FIG. 15 bis 17 zeigen, dass eine das Stellelement 128 bildende Nase der Gewindehülse 124 aus einer in die Führungsausnehmung 1108 mündenden Öffnung 1104a, die die Unterfläche 1104 des Trägerkörpers 110 durchdringt, und einen die Bodenfläche 12a3 der Aufnahmetasche 12a durchdringenden Durchbruch 12d im Grundkörper 12 in Richtung der Stellstange 19 auskragt. Das Stellelement 128, das in der gezeigten Ausführungsform mit der Gewindehülse 124 einstückig ausgebildet ist, weist an seiner von der Schneidplatte 101 abgewandten Stirnseite eine runde (vgl. FIG. 15) Keilfläche 128a auf, die in einem schiefen Winkel α zu der zur Spindelachse 1221 parallelen Verschieberichtung der Gewindehülse 124 bzw. der Spindelachse 1221 verläuft (vgl. FIG. 16 und 6). Bei einer Verdrehung der Differentialgewindespindel 122 wird das Stellelement 128 von der Gewindehülse 124 in eine zur Spindelachse 1221 parallele Verschieberichtung quer zur Dreh- oder Längsmittelachse 14 bzw. zur Stellstange 19 (in FIG. 17 von links nach rechts oder umgekehrt) verschoben.

Man erkennt in FIG. 15, dass das Stellelement 128 aufgrund der durch die Spannfeder 145 und die Spannschraube 140 auf den Trägerkörper 110 ausgeübten Federkraft an der Steuerfläche an der Stellstange 19 abgestützt ist und zwar - je nach der axialen Verschiebelage der Stellstange 19 - entweder an dem Zylinderflächenabschnitt 19a (wie in FIG. 15 gezeigt) oder an dem Kegelflächenabschnitt 19b der Stellstange 19. Die stirnseitige Keilfläche 128a des Stellelements 128 bildet mit der gegenüberliegenden, aus dem Zylinderflächenabschnitt 19a und dem Kegelflächenabschnitt 19b zusammengesetzten Steuerfläche der Stellstange 19 ein Keilflächengetriebe, das eine Verschwenkung des Schneidenträgers 100 um die Schwenkachse 151 bewirkt, wodurch sich die radiale Lage der Schneidplatte 101 relativ zur Dreh- oder Längsmittelachse 14 oder Stellstange 19 bzw. zum Grundkörper 12 ändert und eine gewünschte Feinjustierung des Schneidenträgers 100 ermöglicht wird. Die gezeigte Ausführungsform zeichnet sich durch einen Punktkontakt zwischen der stirnseitigen runden Keilfläche 128a und der ebenfalls runden Steuerfläche der Stellstange 19 aus. Der Punktkontakt gewährleistet eine besonders genaue Feinjustierung des Schneidenträgers 100.

Durch die mit der Gewindehülse 124 einstückige Ausbildung ist das Stellelement 128 in seiner Auskragrichtung Y (vgl. FIG. 15 bis 17) relativ zum Trägerkörper 110 im Wesentlichen lagefest angeordnet. Des Weiteren stimmt die Verschieberichtung X (vgl. FIG. 15 und 6) des Stellelements 128 mit der Verschieberichtung der Gewindehülse 124 oder der Richtung der Spindelachse 1221 überein, während die Auskragrichtung Y des Stellelements 128 senkrecht zur Verschieberichtung X des Stellelements 128 und der Gewindehülse 124 sowie senkrecht zur Richtung der Spindelachse 1221 ist.

Man erkennt in FIG. 15 bis 17 des Weiteren, dass die Schwenkachse 151 des Schneidenträgers 100 im Wesentlichen parallel zur Verschieberichtung des Stellelements 128 des Schneidenträgers 100 ausgerichtet ist.

Der Schneidenträger 100 ist somit in radialer Richtung an der im Grundkörper 12 des Zerspanungswerkzeugs 10 axial verschiebbar angeordneten Stellstange 19 abgestützt und über die Stellstange 19 gegen die Federkraft der Spannschraube 482 durch Verschwenkung um die Schwenkachse 475 relativ zum Grundkörper 12 radial aus- bzw. einklappbar bzw. aus- und einsteuerbar. In der gezeigten Ausführungsform ist der Schneidenträger 100 im Besonderen zwischen einer eingesteuerten Schwenklage, in der die am Schneidenträger 100 gehaltene Schneidplate 101 auf einem minimalen Durchmesser liegt, und einer ausgesteuerten Schwenklage, in der die Schneidplatte 101 auf einem maximalen Durchmesser, d.h. auf dem vorgegebenen Nenndurchmessermaß über dem Außenumfang des Grundkörpers 12, liegt, verstellbar. Die ausgesteuerte Schwenklage des Schneidenträgers 100 ist dann erreicht, wenn das vom Schneidenträger 100 auskragende Stellelement 128 an dem Zylinderflächenabschnitt 19a der Stellstange anliegt, während die eingesteuerte Schwenklage des Schneidenträgers 100 erreicht ist, wenn das vom Schneidenträger 100 auskragende Stellelement 128 an dem Kegelflächenabschnitt 19b der Stellstange 19 anliegt.

In jeder der beiden Schwenklagen ist dank der die Differentialgewindespindel 122 aufweisenden Justiereinrichtung 120, beispielswese zum Ausgleich eines Schneidenverschleißes, eine Schneidenfeinjustierung des Schneidenträgers 100 im µm-Bereich möglich. Durch die im Trägerkörper 110 aufgenommene Justiereinrichtung 120 kann eine Verschiebung des Stellelements 128 in eine Richtung quer zur Stellstange 19 bewirkt werden, um den Schneidenträger 100 mit der Schneidplatte 101 gegenüber der Stellstange 19 bzw. dem Grundkörper 12 in radialer Richtung zu verschwenken. Eine Schneidenjustierung erfolgt zweckmäßig dann, wenn das vom Schneidenträger 100 auskragende Stellelement 128 an dem Zylinderflächenabschnitt 19a der Stellstange anliegt, weil die Schneidplatte 101 in der dadurch erhaltenen Schwenklage auf einem maximalen Durchmesser liegt. Durch das Zusammenwirken der in den Schneidenträger 100 integrierten Justiereinrichtung 120 mit dem ebenfalls im Schneidenträger 100 verschiebbar geführten Stellelement 128 wird also eine Schneidenfeinjustierung durch eine Verstellung des gesamten Schneidenträger 100 ermöglicht. Davon unabhängig verfügt der Schneidenträger 100 dank der oben erwähnten Einstelleinrichtung 170 über eine weitere Möglichkeit zur Lageeinstellung der Schneidplatte 101 gegenüber dem Trägerkörper 110. Erfindungsgemäß ergeben sich für eine Schneidenverstellung also drei voneinander unabhängige Möglichkeiten.

Durch die Integration der Justiereinrichtung 120 in den Trägerkörper 110 wird ein kompakt aufgebauter Schneidenträger 100 erhalten, der sich mit der integrierten Justiereinrichtung 120 und dem Stellelement 128 als eine austauschbare Komponente handhaben und am Grundkörper 12 des Zerspanungswerkzeugs 10 anbringen lässt.

Die oben erwähnten Schneidenträger 600 bis 1000, die lediglich für die Vorbearbeitung der Lagerstege LS1 bis LS5 eingesetzt werden, weisen in der gezeigten Ausführungsform eine mit der Justiereinrichtung 120 vergleichbare Justiereinrichtung nicht auf. Wie man in FIG. 4 erkennt, sind aber auch die Schneidenträger 600 bis 1000 jeweils über ein nicht näher erläutertes Stellelement an einer zugeordneten, aus einem Zylinderflächenabschnitt 19a und einem Kegelflächenabschnitt 19b zusammengesetzten Steuerfläche der Stellstange 19 in radialer Richtung abgestützt und zwar in der Weise, dass analog zu den Schneidenträgern 100 bis 500 durch die Stellstange 19 synchron radial aus- und einklappbar bzw. radial aus- und einsteuerbar sind. Durch eine axiale Verschiebung der Stellstange 19 werden somit alle Schneidenträger, d.h. die Schneidenträger 100 bis 500 und die Schneidenträger 600 bis 1000, synchron radial ein- oder ausgesteuert.

Mit dem oben beschriebenen Lagergassenwerkzeug 10 lässt sich die in FIG. 2 bis 4 skizzierte Lagergasse LG daher gemäß den im Folgenden näher beschriebenen Verfahrensschritten auf einen vorgegebenen Nenndurchmesser spanabhebend bearbeiten:

### 1. Positionieren des Zerspanungswerkzeugs außerhalb der Lagergasse

Zunächst wird das Zerspanungswerkzeug 10 außerhalb, d.h. in FIG. 2 bis 4 rechts vor, der Lagergasse LG, so positioniert, dass die Dreh- oder Längsmittelachse 14 mit der Achse der Lagergasse LG fluchtet. Das Zerspanungswerkzeug 10 dreht sich dabei noch nicht. Alle Schneidenträger 100 bis 1000 sind ausgesteuert, wie es in FIG. 1 gezeigt ist.

### 2. Einsteuern (Einklappen bzw. nach innen Verstellen) aller Schneidenträger

In dieser Ausgangsposition wird in den Druckraum 21a der den Kolben 20 aufnehmenden zylindrischen Öffnung 21 im Grundkörper 12 Kühlschmiermittel mit einem Druck von beispielsweise 20 bar eingespeist, wodurch der Kolben 20 und mit dem Kolben 20 die Stellstange 19 gegen die Federkraft der Druckfeder 22 in FIG. 4 nach links verdrängt bzw. verschoben werden, bis der Kolben 20 gegen den Boden der zylindrischen Öffnung 21 anschlägt, wie es in FIG. 12 gezeigt ist. In diesem Zustand ist die Kühlschmiermittelverbindung zu den zu den Schneiden des Zerspanungswerkzeugs 10 führenden Kanälen 24 unterbrochen. Durch die Verschiebung der Stellstange 19 - in FIG. 4 nach links - verschiebt sich der Kontaktpunkt zwischen jedem der Schneidenträger 100 bis 500 und 600 bis 1000 und der zugeordneten Steuerfläche der Stellstange 19 von dem Zylinderflächenabschnitt 19a hin zu dem Kegelflächenabschnitt 19b, wodurch alle Schneidenträger durch Verschwenkung um die jeweilige Schwenkachse in radialer Richtung synchron eingesteuert werden. Die an den Schneidenträgern gehaltenen Schneidplatten werden dadurch in radialer Richtung nach innen auf ein Durchmessermaß verstellt, das kleiner ist als ein dem vorgegebenen Nenndurchmesser entsprechendes Nenndurchmessermaß.

Das Durchmessermaß, auf dem sich die Schneidplatten in dem eingesteuerten Zustand befinden, kann größer, gleich oder kleiner sein als der Außendurchmesser des Grundkörpers 12.

Es soll hervorgehoben werden, dass Gegenstand einer separaten Erfindung eine Ausführungsform des Zerspanungswerkzeugs ist, bei der dieses Durchmessermaß der Schneidplatten im eingesteuerten Zustand größer ist als der Außendurchmesser des Grundkörpers, wobei in diesem Fall auch die vorstehend beschriebene Feinjustierung durch die Justiereinrichtung 120 für die Schneidenträger 100 bis 500 entfallen kann. In diesem Fall werden die Schneidenträger nicht über ein mit der Justiereinrichtung zusammenwirkendes Stellelement, sondern über ein mit dem Trägerkörper direkt zusammenwirkendes Stellelement von der Stellstange 19 angesteuert. Das so abgewandelte Zerspanungswerkzeug kann - abgesehen von der Justiereinrichtung je Schneidenträger - in allen weiteren konstruktiven und funktionalen Aspekten identisch mit der vorstehend beschriebenen Ausführungsform sowie den später beschriebenen Abwandlungen des Zerspanungswerkzeugs ausgebildet sein.

### 3. Einfahren des Zerspanungswerkzeugs in die Lagergasse

In diesem Zustand wird das Zerspanungswerkzeug in Vorschubrichtung (in FIG. 2 bis 4 von rechts nach links) geradlinig entlang der Dreh- oder Längsmittelachse 14 in die Lagergasse LG eingefahren, beispielsweise bis in die in FIG. 2 bis 4 gezeigte axiale Position, in der sich die Schneidplatten 101 bis 1001 - in Vorschubrichtung gesehen - hinter dem jeweils zu bearbeitenden Lagersteg LS1 bzw. LS5 befinden. Wie es in FIG. 2 bis 4 gezeigt sich, befinden sich die Schneidplatten 101 und 601 dann hinter (in FIG. 2 bis 4 links) des Lagerstegs LS1, die Schneidplatten 201 und 701 hinter (in FIG. 2 bis 4 links) des Lagerstegs LS2 bzw. zwischen den Lagerstegen LS1 und LS2, die Schneidplatten 301 und 801 hinter (in FIG. 2 bis 4 links) des Lagerstegs L32 bzw. zwischen den Lagerstegen LS2 und LS3, die Schneidplatten 401 und 901 hinter (in FIG. 2 bis 4 links) des Lagerstegs LS4 bzw. zwischen den Lagerstegen LS3 und LS4, und die Schneidplatten 501 und 1001 hinter (in FIG. 2 bis 4 links) des Lagerstegs LS5 bzw. zwischen den Lagerstegen LS4 und LS5.

### 4. Aussteuern (Ausklappen bzw. nach außen Verstellen) aller Schneidenträger

In diesem Zustand wird der Kühlschmiermitteldruck auf beispielsweise 5 bar abgesenkt, wodurch der Kolben 20 und mit dem Kolben 20 die Stellstange 19 aufgrund der Federkraft der Druckfeder 22 wieder in die in FIG. 11 gezeigte Ausgansstellung verdrängt oder verschoben werden. Durch die Verschiebung der Stellstange 19 - in FIG. 4 nach links - verschiebt sich der Kontaktpunkt zwischen jedem der Schneidenträger 100 bis 1000 und der zugeordneten Steuerfläche der Stellstange 19 von dem Kegelflächenabschnitt 19b hin zu dem Zylinderflächenabschnitt 19a, wodurch alle Schneidenträger 100 bis 1000 durch Verschwenkung um die jeweilige Schwenkachse in radialer Richtung synchron wieder ausgesteuert werden. Die an den Schneidenträgern 100 bis 1000 gehaltenen Schneidplatten 101 bis 1001 werden dadurch in radialer Richtung wieder nach außen auf das vorgegebene Nenndurchmessermaß verstellt. Gleichzeitig wird die Kühlschmiermittelverbindung zwischen dem durch den Kolben 20 führenden Kanal 20 und den zu den Schneiden des Zerspanungswerkzeugs 10 führenden Kanälen 24 wieder hergestellt, wodurch die Schneiden mit Kühlschmittel versorgt werden.

### 5. Bearbeiten der Lagerstege

In diesem Zustand wird das Zerspanungswerkzeug 10 drehangetrieben und gegensinnig zur Vorschubrichtung (d.h. in FIG. 2 bis 4 von links nach rechts) verfahren, wodurch die Schneidplatten die jeweils zu bearbeitende Lagersteg spababhebend bearbeiten. Das Zerspanungswerkzeug 10 wird dabei im Besonderen nur soweit verfahren, dass sich die Schneidplatten 101 und 601 zwischen den Lagerstegen LS1 und LS2, die Schneidplatten 201 und 701 zwischen den Lagerstegen LS2 und LS3, die Schneidplatten 301 und 801 zwischen den Lagerstegen LS3 und LS4, die Schneidplatten 401 und 901 zwischen den Lagerstegen LS4 und LS5 und die Schneidplatten 501 und 1001 - in Vorschubrichtung gesehen - vor des Lagerstegs LS5 befinden. Durch das Verfahren des Zerspanungswerkzeugs 10 werden daher alle Lagerstege LS1 bis LS5 synchron bearbeitet und zwar zunächst mittels der Schneidplatten 601 bis 1001 vor- und anschließend mittels der Schneidplatten 101 bis 501 auf den vorgegebenen Nenndurchmesser fertigbearbeitet. Konkret bearbeiten die Schneidplatten 601 und 101 den Lagersteg LS1, die Schneidplatten 701 und 201 den Lagersteg LS2, die Schneidplatten 801 und 301 den Lagersteg LS3, die Schneidplatten 901 und 401 den Lagersteg LS4 und die Schneidplatten 1001 und 501 den Lagersteg LS5.

### 6. Einsteuern aller Schneidenträger

In diesem Zustand, in dem das Zerspanungswerkzeug 10 immer noch in dem Werkstück eingefahren ist, aber die Lagerstege LS1 bis LS5 bereits auf den vorgegebenen Nenndurchmesser fertigbearbeitet sind, wird der Drehantrieb des Zerspanungswerkzeugs 10 gestoppt. Nach einer kurzen Verweildauer werden analog zu der für die Ausgangsposition beschriebenen Vorgehensweise durch Erhöhung des Kühlschmiermitteldrucks alle Schneidenträger 100 bis 1000 wieder synchron eingesteuert, wodurch die an den Schneidenträgern 100 bis 1000 gehaltenen Schneidplatten 101 bis 1001 wieder in radialer Richtung nach innen auf ein Durchmessermaß verstellt werden, das kleiner ist als das dem vorgegebenen Nenndurchmesser entsprechende Nenndurchmessermaß.

### 7. Ausfahren des Zerspanungswerkzeugs aus der Lagergasse

In diesem Zustand wird das Zerspanungswerkzeug 10 wieder geradlinig entlang der Dreh- oder Längsmittelachse 14 vollständiger aus der Lagergasse LG herausgefahren. Danach wird die Kühlschmiermittelzufuhr gestoppt, wodurch alle Schneidenträger 100 bis 1000 wieder synchron in den in FIG. 1 gezeigten Zustand radial ausgesteuert werden.

### 8. Messen der bearbeiteten Bohrungsdurchmesser und ggf. Nachjustieren

An das oben beschriebene Zerspanungsverfahren anschließend werden die bearbeiteten Bohrungsdurchmesser aller Lagerstege LS1 bis LS5 auf Nenndurchmessermaßhaltigkeit geprüft. Bei einer beispielsweise verschleißbedingten Abweichung von dem vorgegebenen Nenndurchmesser wird derjenige der Schneidenträger 100 bis 500, der einen dem vorgegebenen Nenndurchmesser nicht mehr genügende Lagersteg bearbeitet hat, durch Betätigung der jeweiligen Justiereinrichtung individuell nachjustiert. Wird also beispielsweise an dem Lagersteg LS4 eine Abweichung von dem vorgegebenen Nenndurchmesser nach oben oder unten festgestellt, so wird die für die Endbearbeitung auf den Nenndurchmesser zuständige Schneidplatte 401 über die in den Schneidenträger 400 integrierte Justiereinrichtung nachjustiert. Die Nachjustierung auf das gewünschte Nenndurchmessermaß ist dabei in beide Richtungen möglich. Dabei kann das Zerspanungswerkzeug 12 an der (nicht gezeigten) Werkzeugmaschinenspindel angekuppelt bleiben. Dank der in die Schneidenträger integrierten, oben beschriebenen Justiereinrichtungen lassen sich daher alle Schneidenträger bei Bedarf individuell nachjustieren und zwar ohne, dass das Zerspanungswerkzeug von der Werkzeugmaschinenspindel getrennt werden müsste. Damit lassen sich Maßschwankungen vermeiden, die auf einen Wechsel oder Ausbau des Zerspanungswerkzeugs 12 zurückgehen könnten.

Selbstverständlich sind Abwandlungen von dem zuvor beschriebenen Ausführungsbeispiel möglich, ohne den durch die Ansprüche definierten Grundgedanken der Erfindung zu verlassen.

In der gezeigten Ausführungsform ist das Stellelement 128 integraler Teil der Gewindehülse 124. Wird die Gewindehülse 124 durch die Differentialgewindespindel 122 in der Führungsausnehmung 1108 verschoben, nimmt die Gewindehülse 124 das Stellelement 128 daher in der gleichen Richtung X mit. Zur Schneidenjustierung bewegt sich das Stellelement 128 daher in eine Richtung X quer zu seiner Auskragrichtung Y (vgl. FIG. 17), d.h. in Verschieberichtung X der Gewindehülse 124 bzw. in Richtung der Spindelachse 1221. In seiner Auskragrichtung Y bewegt sich das Stellelement 128 jedoch nicht, d.h. das Stellelement 128 ist in seiner Auskragrichtung Y im Trägerkörper 110 fest angeordnet.

In der gezeigten Ausführungsform ist das Stellelement des Weiteren unmittelbar an der Stellstange abgestützt. Auch das muss nicht so sein. Zwischen dem schneidenträgerseitigen Stellelement und der grundkörperseitigen Stellstange kann wenigstens ein weiteres druckübertragendes Element angeordnet sein.

In der gezeigten Ausführungsform stützt sich jeder Schneidenträger an der im Grundkörper des Zerspanungswerkzeugs axial verschiebbar geführten Stellstange ab. Auch das muss nicht so sein. Wenn der Zerspanungswerkzeug über keine Stellstange verfügt, kann das schneidenträgerseitige Stellelement unmittelbar oder mittelbar an einer grundkörperseitigen Steuerfläche, beispielsweise an der Bodenfläche einer Aufnahmetasche abgestützt sein.

In der gezeigten Ausführungsform trägt jeder Schneidenträger genau eine Schneidplatte. Die oder ausgewählte Schneidenträger können wenigstens eine weitere Schneidplatte tragen, die - in axialer Richtung des Zerspanungswerkzeugs gesehen - beispielsweise auf Höhe der Schwenkachse des Schneidenträgers angeordnet ist. Die Lage der so angeordneten weiteren Schneidplatte wäre dann von einer mittels der Justiereinrichtung durchgeführten Schneidenjustierung im Wesentlichen unbeeinflusst und kann beispielsweise für die Erzeugung einer Fase oder dergleichen vorgesehen sein.

Des Weiteren können die Schneidenträger statt der oben angegebenen Schneidplatten andere Schneidelemente, beispielsweise Schneindeinsätze, Schneidleisten, etc. tragen.

In der gezeigten Ausführungsform ist jeder Schneidenträger in der Aufnahmetasche am Grundkörper um eine definierte Schwenkachse schwenkbar angeordnet. Abweichend davon kann jeder Schneidenträger aber auch in der Art eines elastisch verformbaren Biegebalkens ausgebildet und in einer Aufnahmetasche am Grundkörper eines Zerspanungswerkzeugs ohne Zwischenschaltung einer Druckfeder fest verschraubt sein. Analog zu der gezeigten Ausführungsform kann der Schneidenträger auch in diesem Fall dann über das aus dem Trägerkörper auskragende Stellelement an der Stellstange oder am Grundkörper abgestützt sein. In einer anderen Abwandlung kann jeder Schneidenträger in einer Aufnahmetasche am Grundkörper des eines Zerspanungswerkzeugs radial verschiebbar angeordnet sein. Analog zu der gezeigten Ausführungsform kann der Schneidenträger auch in diesem Fall dann über das aus dem Trägerkörper auskragende Stellelement an der Stellstange oder am Grundkörper abgestützt sein. Die oben verwendeten Angaben (in radialer Richtung) "ein-/aussteuerbar", "ein-/ausgesteuert"",ein-/aussteuern" etc. sind daher allgemein in dem Sinne zu verstehen, dass die Schneidenträger (in radialer Richtung) verstellbar sind, wobei die Verstellung durch Verschwenken (wie in der gezeigten Ausführungsform), durch elastische Verformung oder durch geradliniges Verschieben erfolgen kann.

In der gezeigten Ausführungsform erfolgt die axiale Verschiebung der Stellstange fluidisch, im Besonderen durch Beaufschlagung des an dem schnittstellenseitigen Ende befindlichen, über eine Druckfeder am Grundkörper abgestützten Kolbens mit Kühlschmiermitteldruck. Alternativ dazu kann eine axiale Verschiebung der Stellstange aber auch hydraulisch, pneumatisch oder elektromotorisch oder elektromagnetisch eingeleitet werden. Das Zerspanungswerkzeug kann zu diesem Zweck einen hydraulisch, pneumatisch, elektromotorisch oder elektromagnetisch arbeitenden Stellantrieb aufweisen, der die Stellstange axial antreibt.

In der gezeigten Ausführungsform hat die werkzeugmaschinenspindelseitige Schnittstelle einen SK (Steilkegel)-Schaft. Alternativ dazu kann aber auch ein sogenannter HSK (Hohlschaftkegel)-Schaft oder dergleichen vorgesehen sein.

In der gezeigten Ausführungsform wird das Zerspanungswerkzeug zur Lagergassenbearbeitung eingesetzt. Die Erfindung ist aber nicht auf diese Anwendung beschränkt. Ein erfindungsgemäßer Schneidenträger findet Anwendung für jedes Zerspanungswerkzeug, das für eine Nachbearbeitung oder Feinbearbeitung einer Bohrung auf einen vorgegebenen Nenndurchmesser verwendet wird. Ein erfindungsgemäßer Schneidenhalter kann daher auch auf einem für die Bearbeitung einer Kolbenbohrung in einem Zylinderkurbelgehäuse oder dergleichen eingesetzt werden. In diesem Fall kann es genügen, wenn das Zerspanungswerkzeug nur einen erfindungsgemäßen Schneidenträger aufweist.

Des Weiteren sind in der gezeigten Ausführungsform mehrere Schneidenträger am Grundkörper des Zerspanungswerkzeugs in vorgegebenen axialen Abständen entlang des Grundkörpers in einer Reihe angeordnet. Die Anordnung in einer Reihe ist nicht zwingend. Die in den vorgegebenen axialen Abständen angeordneten Schneidenträger können in Umfangsrichtung voneinander versetzt, beispielsweise wendelförmig, angeordnet sein. Wenn die an der an der Stellstange den Schneidenträgern zugeordneten Steuerflächen - wie in der gezeigten Ausführungsform - jeweils von rotationssymmetrischen Flächen gebildet sind, also beispielsweise aus einem Kegelflächen- und einem Zylinderflächenabschnitt zusammengesetzt sind, bereitet die Abstützung der in Umfangsrichtung versetzt angeordneten Schneidenträger an der Stellstange kein Problem. Durch die in Umfangsrichtung versetzte Anordnung können je nach Einsatzgebiet des Zerspanungswerkzeugs die axialen Abstände zwischen den Schneidenträgern verkürzt oder am Grundkörper mehr Schneidenträger angeordnet werden. Die in Umfangsrichtung versetzte Anordnung bietet daher eine größere Gestaltungsflexibilität.

## Patentansprüche

1. Schneidenträger (100) zur Anordnung an einem Grundkörper (12) eines Zerspanungswerkzeugs (10), mit einem Trägerkörper (110), der wenigstens ein Schneidelement (101) trägt, und einer in den Trägerkörper (110) integrierten Justiereinrichtung (120) zum Justieren des wenigstens einen Schneideelements (101), wobei
die Justiereinrichtung (120) mit einem im Trägerkörper (110) verschiebbar geführten Stellelement (128) zusammenwirkt, das zur Abstützung am Grundkörper (12) des Zerspanungswerkzeugs (10) vom Trägerkörper (110) auskragt, **dadurch gekennzeichnet, dass**
das Stellelement (128) im Trägerkörper (110) quer zu seiner Auskragrichtung (Y) verschiebbar ist, und
das Stellelement (128) in seiner Auskragrichtung (Y) im Trägerkörper (110) lagefest angeordnet ist.

2. Schneidenträger (100) nach einem der vorhergehenden Ansprüche, **dadurch gekennzeichnet, dass** das Stellelement (128) auf seiner vom Trägerkörper (110) abgewandten Stirnseite eine in einem schiefen Winkel (α) zu seiner Verschieberichtung (X) liegende Keilfläche (128a) aufweist.

3. Schneidenträger (100) nach einem der vorhergehenden Ansprüche, **dadurch gekennzeichnet, dass**
die Justiereinrichtung (120) eine Differentialgewindespindel (122) und eine Gewindehülse (124) aufweist,
die Gewindehülse (124) im Trägerkörper (110) vorzugsweise in Verschieberichtung (X) des Stellelements (128) verschiebbar geführt angeordnet ist und das Stellelement (128) mitnimmt, und
die Differentialgewindespindel (122) mit einem ersten Gewindeabschnitt (122a) in der Gewindehülse (124) und mit einem zweiten Gewindeabschnitt (122b) im Trägerkörper (110) verschraubt ist.

4. Schneidenträger (100) nach Anspruch 3, **dadurch gekennzeichnet, dass** die Achse der Differentialgewindespindel (122) parallel zur Verschieberichtung (X) des Stellelements (128) ausgerichtet ist.

5. Schneidenträger (100) nach Anspruch 3 oder 4, **dadurch gekennzeichnet, dass** die Gewindehülse (124) und das Stellelement (128) miteinander einstückig ausgebildet oder verbunden sind.

6. Schneidenträger (100) nach einem der Ansprüche 3 bis 5, **dadurch gekennzeichnet, dass** die Gewindehülse (124) im Trägerkörper (110) formschlüssig drehfest angeordnet ist.

7. Schneidenträger (100) nach einem der Ansprüche 3 bis 6, **dadurch gekennzeichnet, dass** die Differentialgewindespindel (122) mit einem am Trägerkörper (110) axialfest, aber drehbeweglich angeordneten Betätigungselement (130) drehfest, aber axial beweglich verbunden ist.

8. Schneidenträger (100) nach einem der Ansprüche 3 bis 7, **dadurch gekennzeichnet, dass** der zweite Gewindeabschnitt (122b) der Differentialgewindespindel (122) in einer im Trägerkörper (110) festgelegten Gewindebuchse (126) verschraubt ist.

9. Schneidenträger (100) nach einem der vorhergehenden Ansprüche, **gekennzeichnet durch** eine von der Justiereinrichtung (120) unabhängige, in den Trägerkörper (110) integrierte Einstelleinrichtung (170) zum Einstellen des vom Trägerkörper (110) getragenen Schneidelements (101) relativ zum Trägerkörper.

10. Schneidenträger (100) nach Anspruch 9, **dadurch gekennzeichnet, dass** die Einstelleinrichtung (170) einen Exzenterbolzen-, Gewindekeil- oder Kegelschrauben-Verstellmechanismus aufweist, der mit dem vom Trägerkörper (110) getragenen Schneidelement (101) zusammenwirkt.

11. Schneidenträger (100) nach einem der Ansprüche 1 bis 10, **dadurch gekennzeichnet, dass** der Trägerkörper (110) in der Art eines zweiseitigen Hebels mit einer Schwenkachse (151) ausgebildet ist, wobei die Justiereinrichtung (120) und eine Spannschraube (140) zur Befestigung des Schneidenträgers (100) am Grundkörper (12) auf verschiedenen Hebelseiten angeordnet sind.

12. Schneidenträger (100) nach Anspruch 11, **dadurch gekennzeichnet, dass** der Spannschraube (140) eine am Grundkörper (12) des Zerspanungswerkzeugs (10) abzustützende Druckfeder (145) zugeordnet ist.

13. Zerspanungswerkzeug (10), im Besonderen Bohrungsnachbearbeitungs- oder Bohrungsfeinbearbeitungswerkzeug, beispielsweise Lagergassenwerkzeug, mit einem um eine Drehachse (14) drehantreibbaren Grundkörper (12) und wenigstens einem am Grundkörper (12) in radialer Richtung lagejustierbar angeordneten Schneidenträger (100) nach einem der vorhergehenden Ansprüche.

14. Zerspanungswerkzeug (10) nach Anspruch 13, **dadurch gekennzeichnet, dass** der Schneidenträger (100) in einer zugeordneten außenumfangsseitig offenen Aufnahmetasche (12a) am Grundkörper (12) aufgenommen ist.

15. Zerspanungswerkzeug (10) nach Anspruch 14, **dadurch gekennzeichnet, dass** der Schneidenträger (100) in der Aufnahmetasche (12a) des Grundkörpers (12) abgedichtet aufgenommen ist.

## Claims

1. A blade carrier (100) for arrangement on a base body (12) of a machining tool (10), comprising a carrier body (110), which carries at least one cutting element (101), and an adjusting mechanism (120) integrated in the carrier body (110), for adjusting the at least one cutting element (101), wherein
the adjusting mechanism (120) interacts with a control element (128), which is displaceably guided in the carrier body (110) and which projects from the carrier body (110) so as to be supported on the base body (12) of the machining tool (10), **characterized in that**
the control element (128) is displaceable transversely to its direction of projection (Y) in the carrier body (110), and
the control element (128) is arranged in a positionally fixed manner in its direction of projection (Y) in the carrier body (110).

2. The blade carrier (100) according to one of the preceding claims, **characterized in that**, on its front side facing away from the carrier body (110), the control element (128) has a wedge surface (128a), which lies at an oblique angle (α) to its displacement direction (X).

3. The blade carrier (100) according to one of the preceding claims, **characterized in that**
the adjusting mechanism (120) has a differential threaded spindle (122) and a threaded sleeve (124),
the threaded sleeve (124) is arranged so as to be displaceably guided in the carrier body (110), preferably in the displacement direction (X) of the control element (128) and entrains the control element (128), and
the differential threaded spindle (122) is screw-connected to a first threaded section (122a) in the threaded sleeve (124) and to a second threaded section (122b) in the carrier body (110).

4. The blade carrier (100) according to claim 3, **characterized in that** the axis of the differential threaded spindle (122) is aligned parallel to the displacement direction (X) of the control element (128).

5. The blade carrier (100) according to claim 3 or 4, **characterized in that** the threaded sleeve (124) and the control element (128) are embodied or connected in one piece with one another.

6. The blade carrier (100) according to one of claims 3 to 5, **characterized in that** the threaded sleeve (124) is arranged in the carrier body (110) in a rotationally fixed manner by means of a positive connection.

7. The blade carrier (100) according to one of claims 3 to 6, **characterized in that** the differential threaded spindle (122) is connected in a rotationally fixed, but axially movable manner to an actuating element (130), which is arranged on the carrier body (110) in an axially fixed, but rotationally movable manner.

8. The blade carrier (100) according to one of claims 3 to 7, **characterized in that** the second threaded section (122b) of the differential threaded spindle (122) is screwed into a threaded bushing (126) fixed in the carrier body (110).

9. The blade carrier (100) according to one of the preceding claims, **characterized by** a setting mechanism (170), which is independent of the adjusting mechanism (120) and is integrated in the carrier body (110), for setting the cutting element (101) carried by the carrier body (110) relative to the carrier body.

10. The blade carrier (100) according to claim 9, **characterized in that** the setting mechanism (170) has an eccentric bolt, threaded wedge or conical screw adjusting mechanism, which interacts with the cutting element (101) carried by the carrier body (110).

11. The blade carrier (100) according to one of claims 1 to 10, **characterized in that** the carrier body (110) is embodied in the manner of a bilateral lever comprising a pivot axis (151), wherein the adjusting mechanism (120) and a clamping screw (140) for fastening the blade carrier (100) to the base body (12) are arranged on different lever sides.

12. The blade carrier (100) according to claim 11, **characterized in that** a compression spring (145) supported on the base body (12) of the machining tool (10) is assigned to the clamping screw (140).

13. A machining tool (10), in particular bore post-machining or bore finishing tool, for example bearing track tool, comprising a base body (12), which is rotationally drivable about an axis of rotation (14), and at least one blade carrier (100) according to one of the preceding claims, which is arranged on the base body (12) so as to be position-adjustable in the radial direction.

14. The machining tool (10) according to claim 13, **characterized in that** the blade carrier (100) is accommodated in an assigned receiving pocket (12a), which is open on the outer circumference, on the base body (12).

15. The machining tool (10) according to claim 14, **characterized in that** the blade carrier (100) is accommodated in a sealed manner in the receiving pocket (12a) of the base body (12).

## Revendications

1. Porte-Iame (100) destiné à être agencé sur un corps de base (12) d'un outil d'usinage par enlèvement de copeaux (10), comprenant un corps de support (110) qui supporte au moins un élément de coupe (101) et un dispositif d'ajustement (120) intégré dans le corps de support (110) pour ajuster le au moins un élément de coupe (101), dans lequel
le dispositif d'ajustement (120) coopère avec un élément de réglage de position (128) qui est guidé de manière mobile dans le corps de support (110) et fait saillie à partir du corps de support (110) pour venir en appui sur le corps de base (12) de l'outil de coupe (10), **caractérisé en ce que**
l'élément de réglage de position (128) peut être déplacé dans le corps de support (110) transversalement à sa direction de saillie (Y), et
l'élément de réglage de position (128) est agencé dans une position fixe dans sa direction de saillie (Y) dans le corps de support (110).

2. Porte-Iame (100) selon l'une quelconque des revendications précédentes, **caractérisé en ce que** l'élément de réglage de position (128) présente, sur sa face avant opposée au corps de support (110), une surface de coin (128a) située selon un angle oblique (α) par rapport à sa direction de déplacement (X).

3. Porte-Iame (100) selon l'une quelconque des revendications précédentes, **caractérisé en ce que**
le dispositif d'ajustement (120) présente une vis-mère différentielle(122) et un manchon fileté (124),
le manchon fileté (124) est agencé de manière mobile dans le corps de support (110), de préférence dans la direction de déplacement (X) de l'élément de réglage de position (128) et entraîne l'élément de réglage de position (128), et
la vis-mère différentielle (122) est vissée avec une première section filetée (122a) dans le manchon fileté (124) et avec une seconde section filetée (122b) dans le corps de support (110).

4. Porte-Iame (100) selon la revendication 3, **caractérisé en ce que** l'axe de la vis-mère différentielle (122) est orienté parallèlement à la direction de déplacement (X) de l'élément de réglage de position (128).

5. Porte-Iame (100) selon la revendication 3 ou 4, **caractérisé en ce que** le manchon fileté (124) et l'élément de réglage de position (128) sont formés d'un seul tenant ou reliés l'un à l'autre.

6. Porte-Iame (100) selon l'une quelconque des revendications 3 à 5, **caractérisé en ce que** le manchon fileté (124) est agencé dans le corps de support (110) solidaire en rotation par complémentarité de forme.

7. Porte-Iame (100) selon l'une quelconque des revendications 3 à 6, **caractérisé en ce que** la vis-mère différentielle (122) est reliée solidaire en rotation mais mobile axialement à un élément d'actionnement (130) agencé sur le corps de support (110) axialement fixe mais mobile en rotation.

8. Porte-Iame (100) selon l'une quelconque des revendications 3 à 7, **caractérisé en ce que** la seconde section filetée (122b) de la vis-mère différentielle (122) est vissée dans un manchon fileté (126) monté de manière fixe dans le corps de support (110).

9. Porte-Iame (100) selon l'une quelconque des revendications précédentes, **caractérisé par** un dispositif de réglage (170) intégré au corps de support (110) et indépendant du dispositif d'ajustement (120) pour régler l'élément de coupe (101) supporté par le corps de support (110) par rapport au corps de support.

10. Porte-Iame (100) selon la revendication 9, **caractérisé en ce que** le dispositif de réglage (170) présente un mécanisme de réglage à boulon excentrique, à coin fileté ou à vis conique qui coopère avec l'élément de coupe (101) supporté par le corps de support (110).

11. Porte-Iame (100) selon l'une quelconque des revendications 1 à 10, **caractérisé en ce que** le corps de support (110) est réalisé à la manière d'un levier à deux côtés avec un axe de pivotement (151), dans lequel le dispositif d'ajustement (120) et une vis de serrage (140) pour une fixation du porte-Iame (100) sont agencés au niveau du corps de base (12) sur des côtés de levier différents.

12. Porte-Iame (100) selon la revendication 11, **caractérisé en ce que** la vis de serrage (140) est associée un ressort de compression (145) venant en appui sur le corps de base (12) de l'outil d'usinage par enlèvement de copeaux (10).

13. Outil d'usinage par enlèvement de copeaux (10), en particulier outil de postusinage ou d'usinage fin d'alésage, par exemple un outil d'une piste de roulement, avec un corps de base (12) pouvant être entraîné en rotation autour d'un axe de rotation (14) et au moins un porte-Iame (100) selon l'une quelconque des revendications précédentes agencé sur le corps de base (12) de manière à pouvoir être ajusté en position dans la direction radiale.

14. Outil d'usinage par enlèvement de copeaux (10) selon la revendication 13, **caractérisé en ce que** le porte-Iame (100) est reçu dans une poche de réception ouverte sur le côté périphérique extérieur associé (12a) au niveau du corps de base (12).

15. Outil d'usinage par enlèvement de copeaux (10) selon la revendication 14, **caractérisé en ce que** le porte-Iame (100) est reçu de manière étanche dans la poche de réception (12a) du corps de base (12).
